Europäisches Patentamt

European Patent Office

Office européen des brevets

(19)

(11) Veröffentlichungsnummer: **0 015 566**
**B1**

(12) **EUROPÄISCHE PATENTSCHRIFT**

(45) Veröffentlichungstag der Patentschrift: **13.06.84**

(21) Anmeldenummer: **80101158.6**

(22) Anmeldetag: **07.03.80**

(51) Int. Cl.³: **G 01 S 17/32, G 01 S 7/48, H 03 K 3/335**

(54) Entfernungsmessgerät nach dem Impulslaufzeitverfahren.

(30) Priorität: **07.03.79 DE 2908854**

(43) Veröffentlichungstag der Anmeldung:
**17.09.80 Patentblatt 80/19**

(45) Bekanntmachung des Hinweises auf die Patenterteilung:
**13.06.84 Patentblatt 84/24**

(84) Benannte Vertragsstaaten:
**CH FR GB IT NL SE**

(56) Entgegenhaltungen:
**DD - A - 115 977**
**DE - A - 2 161 159**
**DE - A - 2 216 765**
**DE - A - 2 420 194**
**DE - A - 2 544 842**
**DE - B - 2 508 974**
**US - A - 3 611 146**

(73) Patentinhaber: **Endress u. Hauser GmbH u.Co.**
**Hauptstrasse 1**
**D-7867 Maulburg (DE)**

(72) Erfinder: **Kompa, Günter, Dr.**
**Bühlmatt 27**
**D-7860 Schopfheim (DE)**
Erfinder: **Stock, Don John Rodrigo, Dr.**
**Untere Staltenstrasse 13**
**D-7860 Schopfheim-Langenau (DE)**

(74) Vertreter: **Leiser, Gottfried, Dipl.-Ing.**
**Patentanwälte Prinz, Bunke & Partner Ernsberger**
**Strasse 19**
**D-8000 München 60 (DE)**

Courier Press, Leamington Spa, England.

## Beschreibung

Die Erfindung bezieht sich auf ein Entfernungsmeßgerät nach dem Impulslaufzeitverfahren mit einem Lichtimpulserzeuger zur Erzeugung periodischer Sende-Lichtimpulse, einer Sendeoptik zum Aussenden der Sende-Lichtimpulse, einer Empfangsoptik zum Empfang der durch Reflexion der Sende-Lichtimpulse am Meßobjekt erzeugten Echo-Lichtimpulse, einem photoelektrischen Wandler zur Umwandlung der Echo-Lichtimpulse in elektrische Meßimpulse und mit einer Zeitmeßanordnung zur Messung des Zeitabstands zwischen einander entsprechenden Flanken jedes Meßimpulses und eines in vorgegebener zeitlicher Beziehung zu dem ihm zugeordneten Sende-Lichtimpuls stehenden elektrischen Referenzimpulses.

Ein Entfernungsmeßgerät dieser Art ist beispielsweise aus der Zeitschrift "Optik", 44 (1976) No. 2, Seiten 217 bis 222, bekannt. Ein wesentliches Problem solcher elektrooptischer Entfernungsmeßgeräte besteht darin, daß bei den verhältnismäßig kleinen Entfernungen, bei denen solche Geräte eingesetzt werden können, die zu messenden Zeitabstände sehr klein sind. Es ist daher schwierig, mit vertretbarem Aufwand eine ausreichende Meßgenauigkeit und ein brauchbares Auflösungsvermögen zu erzielen. Ferner müssen sehr kurze Impulse mit steilen Flanken verarbeitet werden, was Schaltungen mit großer Bandbreite erfordert. Da die empfangenen Echo-Lichtimpulse sehr schwach und verrauscht sind, muß empfangsseitig eine Verstärkung mit großem Verstärkungsfaktor vorgenommen werden. Die hierfür erforderlichen mehrstufigen Verstärker sind sehr aufwendig, wenn ihre Bandbreite so groß ist, daß die Meßimpulse ohne Abflachung der Impulsflanken verstärkt werden. Wenn dagegen preiswerte integrierte Verstärker geringer Bandbreite eingesetzt werden, werden die Impulsflanken verschliffen, wodurch die Meßgenauigkeit beeinträchtigt wird. Ferner werden durch die breitbandigen hochverstärkenden Verstärker auch alle Rausch- und Störsignale in gleicher Weise verstärkt, wodurch sich die Gefahr von Meßfehlern infolge von Fehlauslösungen ergibt.

Wenn die Zeitmessung, wie üblich, durch Auszählen von Taktimpulsen während der Meßzeit erfolgt, ist das Auflösungsvermögen durch den Zeitabstand von zwei aufeinanderfolgenden Taktimpulsen, also die Taktimpulsfrequenz bestimmt. Auch hier hängt der Aufwand von der Frequenzgrenze der verwendeten Impulsgeneratoren und Impulszähler ab.

Um teure Zähleinrichtungen mit höheren Zählimpulsfrequenzen zu vermeiden, ist es aus der zuvor genannten Veröffentlichung bekannt, eine analoge Zeitdehnung etwa um den Faktor 100 vorzunehmen und anschließend mit einer niedrigeren Taktfrequenz digital auszuzählen. Eine analoge Zeitdehnung erfolgt dadurch, daß ein aus Referenzimpuls und Meßimpuls abgeleiteter Torimpuls mit der wahren Meßzeit eine Konstantstromquelle schaltet, die einen Speicherkondensator auflädt. Nach dem Abschalten des Torimpulses wird der Speicher durch einen ebenfalls konstanten, aber wesentlich kleineren Strom entladen. Die Zeitdehnung der Torzeit ergibt sich aus dem Verhältnis von Ladestrom zu Entladestrom. Dies erlaubt zwar die Anwendung niedrigerer Zählimpulsfrequenzen, aber die Systemgenauigkeit wird dadurch nicht verbessert, weil zunächst ein Torimpuls mit der wahren Meßzeit gebildet werden muß, in den alle erwähnten Fehlerursachen eingehen. Vor allem bleibt das Problem der breitbandigen Verstärkung der empfangenen Echosignale bestehen. Außerdem wird die Meßgenauigkeit durch die Temperaturabhängigkeit der für die analoge Zeitdehnung verwendeten Schaltungselemente beeinträchtigt.

Aus der DE—A—2 544 842 ist andrerseits ein mit Mikrowellen nach dem Impulslaufzeitverfahren arbeitendes Entfernungsmeßgerät bekannt, das eine nach dem Sampling-Verfahren arbeitende Zeittransformationsstufe aufweist. Die Zeittransformationsstufe enthält einen Abtastimpulsgenerator zur Erzeugung periodischer Abtastimpulse, deren Periode von der Sendeimpulsperiode geringfügig verschieden ist, eine Abtastschaltung für in vorgegebener zeitlicher Beziehung zu den Sendeimpulsen stehende Referenzimpulse und eine Abtastschaltung für aus den empfangenen Echoimpulse gebildete Meßimpulse, und sie erzeugt durch Abtastung einer großen Anzahl aufeinanderfolgender Impulse mittels der Abtastimpulse zeittransformierte Impulse. Die Zeitmeßanordnung mißt in diesem Fall den Zeitabstand zwischen jedem zeittransformierten Referenzimpuls und einem zugeordneten zeittransformierten Meßimpuls. Die durch die Zeittransformationsstufe bewirkte Zeitdehnung ergibt die Wirkung, daß die zu messenden Zeitabstände zwischen den Impulsen um den Zeitdehnungsfaktor, der sehr groß sein kann, vergrößert sind; die Zeitmessung kann daher bei gleichem Schaltungsaufwand mit in gleichem Verhältnis erhöhter Genauigkeit oder bei gleicher Genauigkeit mit einem wesentlich geringeren Schaltungsaufwand als an den Echtzeitimpulsen vorgenommen werden. Dies ist besonders bei der Messung sehr kurzer Entfernungen vorteilhaft, bei denen die zu messenden Zeitabstände im Nanosekundenbereich liegen.

Da das aus der DE—A—2 544 842 bekannte Entfernungsmeßgerät mit Radarimpulsen in Form von Mikrowellen arbeitet, enthält der Empfänger in üblicher Weise einen sich an den Mikrowellenteil anschließenden Hochfrequenzverstärker, einen Demodulator und einen Videoverstärker. Die demodulierten und verstärkten Echtzeit-Videoimpulse werden als Meßimpulse der Zeittransformationsstufe zugeführt. Die Messung des Zeitabstands zwischen zeittransformierten Impulsen erfolgt dadurch, daß diese differenziert werden und der Nulldurchgang des differenzierten Signals ermittelt wird. Die Zeitabstandsmessung erfolgt zwischen den ermittelten Nulldurchgängen, von denen angenommen wird, daß sie in die Mitte des ursprünglichen zeitgedehnten Impulses liegen.

Ein Entfernungsmeßgerät ähnlicher Art, das ebenfalls mit Radarimpulsen in Form von Mikrowellen arbeitet, ist in der DE—B—2 508 974 beschrieben, allerdings mit dem Unterschied, daß bei diesem Entfernungsmeßgerät die Referenzimpulse nach entsprechender Frequenzteilung den Sägezahngenerator eines Oszilloskops auslösen, auf dem die zeittransformierten Meßimpulse dargestellt werden. Auch in diesem Fall enthält der Empfänger einen sich an den Mikrowellenteil anschließenden Verstärker, der die auf die Zwischenfrequenz umgesetzten Echosignale verstärkt, bevor diese der Abtastschaltung zugeführt werden. In dieser Druckschrift ist die Tatsache erwähnt, daß jede nach der Zeittransformation durchgeführte Verstärkung mit schmalbandigen Verstärkern durchgeführt werden kann.

Schließlich ist aus der DE—A—2 161 159 ein mit Lichtimpulsen nach dem Impulszeitverfahren arbeitendes Entfernungsmeßgerät bekannt, bei dem eine Abtastung der den Echoimpulsen entsprechenden elektrischen Meßimpulse mit Hilfe von Abtastimpulsen erfolgt, deren Periode von der Periode der Sende-Lichtimpulse geringfügig verschieden ist, so daß sich die Zeitlage der Abtastimpulse relativ zur Zeitlage der Sende-Lichtimpulse fortschreitend ändert. Die Entfernungsbestimmung erfolgt aber in diesem Fall nicht durch Messung des Zeitabstands zwischen einander entsprechenden Impulsflanken, sondern durch Feststellung der Koinzidenz zwischen den Meßimpulsen und den Abtastimpulsen. Zur Verbeserung des Rauschabstands werden die durch mehrere aufeinanderfolgende Abtastungen der Meßimpulse erhaltenen Abtastwerte integriert; sobald der Integralwert größer ist als ein vorgegebener Schwellenwert, wird die fortschreitende Änderung der Zeitlage der Abtastimpulse in der bisherigen Änderungsrichtung angehalten oder in die entgegengesetzte Änderungsrichtung umgekehrt. Die dann erreichte Zeitlage der Abtastimpulse ist ein Maß für die Laufzeit der am Ziel reflektierten Echoimpulse und damit für die Entfernung des Ziels. Im Fall der Umkehrung der Änderungsrichtung werden die Abtastimpulse in der Art eines Entfernungstors auf die Meßimpulsmitte nachgeregelt. Auch bei diesem bekannten Entfernungsmeßgerät werden die vom photoelektrischen Wandler abgegebenen Meßimpulse zunächst einer Vorverstärkung unterworfen, bevor sie in der angegebenen Weise verarbeitet werden.

Die Verstärkung der Meßimpulse vor der Abtastung war bei allen bekannten, mit Zeitdehnung arbeitenden Entfernungsmeßgeräten notwendig, weil die verfügbaren Abtastschaltungen nicht in der Lage waren, die aus den schwachen und verrauschten Echoimpulsen gewonnenen Meßimpulse ohne vorhergehende Verstärkung abzutasten. Bei den mit Mikrowellenimpulsen arbeitenden Entfernungsmeßgeräten ist diese Vorverstärkung aus mehreren Gründen verhältnismäßig problemlos und ohne großen Aufwand möglich. Einerseits ist die Bandbreite von Mikrowellenimpulsen wesentlich kleiner als diejenige von kurzen Lichtimpulsen und andrerseits sind auf die Anforderungen an die Breitbandigkeit der Verstärkung geringer, vor allem wenn die Zeitmessung nicht zwischen den Impulsflanken, sondern—wie bei dem Entfernungsmeßgerät nach der DE—A—2 544 842—zwischen den Impulsmitten erfolgt. Schließlich sind auch die Anforderungen an die Entfernungsauflösung, d.h. die Meßgenauigkeit, bei Mikrowellengeräten im allgemeinen wesentlich geringer als bei der Entfernungsmessung mit Lichtimpulsen, die insbesondere dann angewendet wird, wenn sehr kurze Entfernungen im Meterbereich mit einer Genauigkeit gemessen werden sollen, die im Zentimeterbereich liegt. Andrerseits sind die empfangenen Echo-Lichtimpulse meist sehr schwach und stark verrauscht, so daß für die Abtastung mit den herkömmlichen Abtastschaltungen eine erhebliche Vorverstärkung erforderlich ist. Die hierfür erforderlichen Verstärker mit ausreichender Bandbreite sind sehr aufwendig. Ferner werden durch die breitbandigen hochverstärkenden Verstärker auch alle Rausch- und Störsignale in gleicher Weise verstärkt. Wenn dagegen preiswerte Verstärker geringer Bandbreite verwendet werden, werden die Impulsflanken verschliffen. Alle in den verstärkten Meßimpulsen enthaltenen Fehler, insbesondere verschliffene Impulsflanken, finden sich in den zeittransformierten Impulsen mit einer durch den Zeittransformationsfaktor bedingten Zeitdehnung wieder, so daß sie sich voll auf das Meßergebnis auswirken.

Aufgabe der Erfindung ist die Schaffung eines nach dem Impulslaufzeitverfahren arbeitenden Entfernungsmeßgeräts, das die Vorteile der Entfernungsmessung mit den Vorteilen der Zeitdehnung nach dem Sampling-Verfahren unter Vermeidung aufwendiger breitbandiger Verstärker verbindet.

Ausgehend von einem Entfernungsmeßgerät der eingangs angegebenen Art wird diese Aufgabe nach der Erfindung dadurch gelöst, daß eine nach dem Sampling-Verfahren arbeitende Zeittransformationsstufe vorgesehen ist, die einen Abtastimpulsgenerator zur Erzeugung periodischer Abtastimpulse, deren Periode von der Periode der Sende-Lichtimpulse geringfügig verschieden ist, eine Abtastschaltung für die Referenzimpulse und eine Abtastschaltung für die Meßimpulse enthält und durch Abtastung einer großen Anzahl aufeinanderfolgender Impulse mittels der Abtastimpulse zeittransformierte Referenzimpulse und zeittransformierte Meßimpulse erzeugt, daß die Meßimpuls-Abtastschaltung für die Abtastung kleiner und verrauschter Signale ausgebildet ist und die elektrischen Ausgangssignale des photoelektrischen Wandlers ohne vorhergehende Verstärkung empfängt, und daß die Zeitmeßanordnung den Zeitabstand zwischen einander entsprechenden Flanken der zeittransformierten Impulse mißt.

Bei dem mit Lichtimpulsen arbeitenden Entfernungsmeßgerät nach der Erfindung werden die vom photoelektrischen Wandler abgegebenen elektrischen Meßimpulse unmittelbar ohne Verstärkung durch Abtastung nach dem Sampling-Verfahren zeittransformiert. Dies ist trotz des sehr niedrigen Pegels der Meßimpulse und des im Vergleich dazu hohen Rauschpegels infolge der Verwendung einer für die Abtastung kleiner und verrauschter Signale besonders ausgebildeten Abtastschaltung möglich.

Die für die Zeitmessung erforderliche Verstärkung wird im Anschluß an die Zeittransformation vorgenommen. Da durch die Zeitdehnung alle im Frequenzspektrum des ursprünglichen Signals enthaltenen Frequenzen im Verhältnis des Zeittransformationsfaktors herabgesetzt sind, ist auch die für die Verstärkung erforderliche Bandbreite im gleichen Verhältnis verringert. Für die Verstärkung genügen daher einfache Verstärker geringer Bandbreite, ohne daß die Anstiegssteilheit der Impulse, bezogen auf den gedehnten Zeitmaßstab, verschlechtert wird. Es können daher insbesondere die im Handel in Form von preiswerten integrierten Schaltungen erhältlichen Verstärker verwendet werden.

Vorteilhafte Ausgestaltungen und Weiterbildungen der Erfindung, insbesondere eine bevorzugte Ausführungsform einer für die Abtastung kleiner und verrauschter Signale ausgebildeten Abtastschaltung, sind in den Unteransprüchen gekennzeichnet.

Die Erfindung wird anhand eines in der Zeichnung dargestellten Ausführungsbeispiels erläutert. In der Zeichnung zeigen:

Fig. 1 das Blockschema eines mit Lichtimpulsen arbeitenden Entfernungsmeßgeräts nach dem Stand der Technik,

Fig. 2 Zeitdiagramme von Impulsen, die bei dem Entfernungsmeßgerät von Fig. 1 vorkommen,

Fig. 3 das Blockschema eines Entfernungsmeßgeräts nach der Erfindung,

Fig. 4 ein Blockschaltbild der Zeittransformationsstufe des Entfernungsmeßgeräts von Fig. 3,

Fig. 5 Zeitdiagramme zur Erläuterung der Funktionsweise der Zeittransformationsstufe von Fig. 4,

Fig. 6 das Schaltbild einer Ausführungsform des Impulsgenerators des Entfernungsmeßgeräts von Fig. 3,

Fig. 7 ein Zeitdiagramm der durch den Impulsgenerator von Fig. 6 erzeugten Lichtimpulsfolge,

Fig. 8 ein Zeitdiagramm des durch den Impulsgenerator von Fig. 6 erzeugten Referenzimpulses,

Fig. 9 eine praktische Ausführung des im Impulsgenerator von Fig. 6 enthaltenen Avalanche-Impulsgenerators in Form einer integrierten Hybridschaltung,

Fig. 10 verschiedene Möglichkeiten der Anbringung der Ladeleitung an der Hybridschaltung von Fig. 9,

Fig. 11 das Schaltbild einer Ausführungsform der Impulserzeugerstufe im Abtastimpulsgenerator der Zeittransformationsstufe von Fig. 4,

Fig. 12 eine praktische Ausführung der Impulserzeugerstufe von Fig. 11 in Form einer integrierten Hybridschaltung,

Fig. 13 das Schaltbild einer Ausführungsform des Photodetektors und der zugehörigen Abtastschaltung,

Fig. 14 die eine Seite einer praktischen Ausführung der Anordnung von Fig. 13 in Form einer integrierten Hybridschaltung und

Fig. 15 die andere Seite der integrierten Hybridschaltung von Fig. 14.

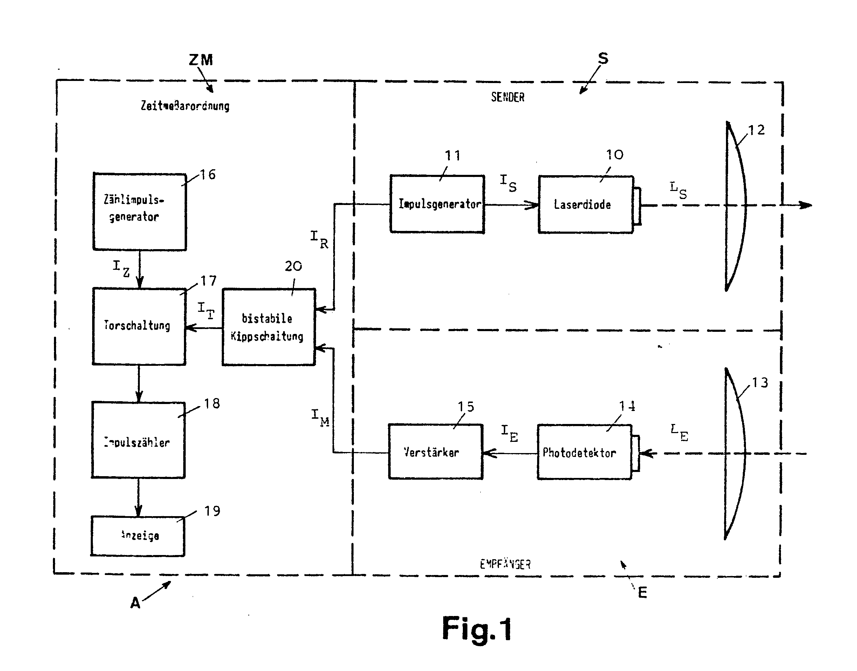

Fig. 1 zeigt den Aufbau eines Laser-Entfernungsmeßgeräts nach dem Stand der Technik. Es besteht aus einem Sender S, einem Empfänger E und einer Auswerteelektronik A. Der Sender S enthält eine Laserdiode 10, die von einem Impulsgenerator 11 mit Stromimpulsen $I_S$ angesteuert wird. Die Laserdiode 10 erzeugt für jeden Stromimpuls einen Lichtimpuls $L_S$, der von einer Sendeoptik 12 gebündelt und in Form eines parallelen oder leicht divergenten Lichtbündels in Richtung zum Meßobjekt, dessen Entfernung gemessen werden soll, abgestrahlt wird. Der am Meßobjekt reflektierte, stark abgeschwächte Echolichtimpuls $L_E$ gelangt über eine im Empfänger E enthaltene fokussierende Empfangsoptik 13 zu der lichtempfindlichen Fläche eines Photodetektors 14, der für jeden Echolichtimpuls $L_E$ einen elektrischen Stromimpuls $I_E$ erzeugt. Die vom Photodetektor 14 gelieferten Stromimpulse $I_E$ werden mit Hilfe eines Breitbandverstärkers 15 verstärkt und als Meßimpulse $I_M$ der Auswerteelektronik A zugeführt.

Der Zeitabstand zwischen dem Zeitpunkt der Aussendung eines Sendelichtimpulses $L_S$ und dem Zeitpunkt des Eintreffens des aufgrund dieses Sendelichtimpulses am Meßobjekt reflektierten Empfangslichtimpulses $L_E$ ist offensichtlich gleich der doppelten Laufzeit des Lichtes zwischen dem Entfernungsmeßgerät und dem Meßobjekt und somit Maß für die Entfernung zwischen Entfernungsmeßgerät und Meßobjekt. Da die Stromimpulse $I_R$ bzw. $I_S$ und $I_M$ bzw. $I_E$ in einer konstanten und genau bekannten zeitlichen Beziehung zu den Lichtimpulsen $L_S$ bzw. $L_E$ stehen, ist offensichtlich auch der Zeitabstand zwischen den Stromimpulsen $I_S$ und $I_E$ bzw. zwischen den Stromimpulsen $I_R$ und $I_M$ ein Maß für die zu messende Entfernung.

Die Auswerteelektronik A enthält daher eine Zeitmeßanordnung ZM zur Messung des Zeitabstands zwischen den beiden elektrischen Impulsen $I_S$ und $I_E$. Die Zeitmeßanordnung ZM besteht bei dem dargestellten Gerät aus einem Zählimpulsgenerator 16, der Zählimpulse $I_Z$ mit einer konstanten, genau bekannten Folgefrequenz $f_Z$ abgibt. Die vom Zählimpulsgenerator 16 gelieferten Zählimpulse $I_Z$ werden über eine Torschaltung 17 einem Impulszähler 18 zugeführt, dessen Zählerstand mit Hilfe einer Anzeigevorrichtung 19 angezeigt werden kann. Der Steuereingang der Torschaltung 17 ist mit dem Ausgang einer bistabilen Kippschaltung 20 verbunden, die am Setzeingang einen vom Impulsgenerator 11 stammenden, mit dem Sendestromimpuls $I_S$ synchronen Referenzimpuls $I_R$ und am Rücksetzeingang den vom Breitbandverstärker 15 gelieferten Meßimpuls $I_M$ empfängt. Die bistabile Kippschaltung 20 ist so ausgebildet, daß sie durch die Vorderflanke jedes Referenzimpulses $I_R$ gesetzt und durch die Vorderflanke jedes Meßimpulses $I_M$ zurückgesetzt wird. Sie liefert daher am Ausgang einen Torimpuls $I_T$, dessen Dauer gleich dem Zeitabstand zwischen den Impulsen $I_R$ und $I_M$ ist. Die Torschaltung 17 ist während der Dauer des Torimpulses $I_T$ geöffnet, und die während der Öffnungszeit durchgelassenen Zählimpulse $I_Z$ werden im Impulszähler 18 gezählt. Die gezählte Impulszahl, die mittels der Anzeigevorrichtung 19 angezeigt wird, ist der zu messenden Entfernung proportional.

Der gleiche Vorgang wiederholt sich periodisch mit der Fogeperiode der Sendelichtimpulse $I_S$, die natürlich so groß sein muß, daß bei der größten zu messenden Entfernung der Echoimpuls $L_E$ eingetroffen ist, bevor der nächste Sendelichtimpuls abgestrahlt wird. In der Praxis wird bei Laser-Entfernungsmeßgeräten der in Fig. 1 gezeigten Art mit einer sehr niedrigen Folgefrequenz gearbeitet, die beispielsweise 300 Hz beträgt, Die Anzeigevorrichtung 19 zeigt laufend die Entfernung des Meßobjekts in Echtzeit an.

Das Auflösungsvermögen dieses Entfernungsmeßgeräts, d.h. die kleinste noch meßbare Entfernungsdifferenz, ist durch den Zeitabstand von zwei Zählimpulsen $I_Z$ bestimmt. Dieser Zeitabstand kann nicht beliebig klein gemacht werden, weil die Zahlimpulsfrequenz $f_Z$ nach oben begrenzt ist. Mit der Lichtgeschwindigkeit c und der Zählimpulsfrequenz $f_Z$ ergibt sich die Genauigkeit der Entfernungsmessung zu

$$\pm\Delta R=\frac{c}{2f_Z}.$$

Die Zählimpulsfrequenz liegt im allgemeinen bei 30 MHz, so daß sich eine Entfernungsauflösung von 5 m ergibt.

Die Meßgenauigkeit ist ferner durch die Bandbreite der Schaltungen begrenzt, die steile Impulse mit großer Bandbreite verarbeiten müssen. So können leistungsstarke Lichtimpulse mit Anstiegszeiten im Nano- oder Pikosekundenbereich aufgrund von Stromimpulsen erzeugt werden, deren Anstiegszeit kleiner als die Lebensdauer der Elektronen in der Laserdiode sein muß. Empfangsseitig müssen die Echoimpulse, die gewohnlich infolge starker Energieverluste an diffus reflektierenden Meßobjeckten sehr schwach sind, sehr verstärkt werden, so daß mehrere Verstärkstufen eingesetzt werden müssen. Bereits für die verzerrungsfreie Übertragung einer Impulsflanke mit einer Anstiegszeit von 1 ns ist eine Bandbreite von 350 MHz erforderlich. Verstärker mit dieser Bandbreite sind z.Zt. nicht als preiswerte integrierte Bausteine erhältlich. Es werden daher integrierte Bausteine mit einer Bandbreite von etwa 120 MHz eingesetzt. Dadurch wird das Frequenzspektrum der übertragenen bzw. verstärkten Impulse begrenzt, was sich darin äußert, daß die Impulsflanken verschliffen werden, so daß die Anstiegszeit verlängert wird.

Weiterhin werden wegen der immer noch sehr großen Bandbreite des Verstärkers 15 auch empfangene Rauschimpulse in gleicher Weise verstärkt wie die Echoimpulse, so daß die Gefahr besteht, daß die Auswerteelektronik auf Rauschimpulse anspricht. Schließlich setzt auch das Eigenrauschen des Verstärkers 15 die Empfindlichkeit des Systems herab.

Diese Erscheinungen haben zur Folge, daß sich der Systembedingte Fehler der Zeitbestimmung erhöht. So errechnet sich die Standardabweichung bei einem Zeitmeßvorgang zu

$$\delta t=\frac{\text{Anstiegszeit}}{\text{Signal-/Rauschverhältnis}}$$

d.h. sie ist proportional zur Anstiegszeit und umgekehrt proportional zum Signal-/Rauschverhältnis.

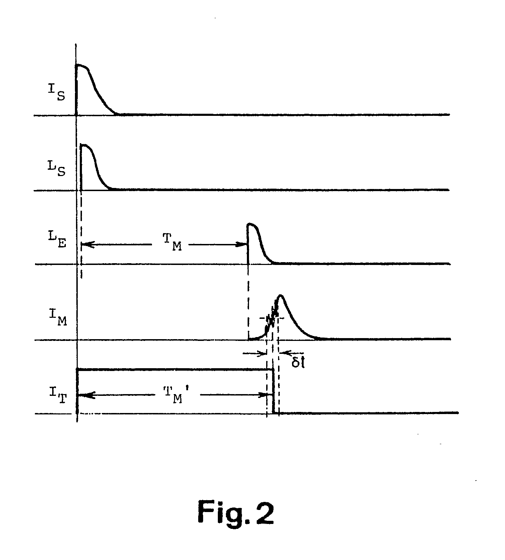

Die zeitlichen Zusammenhänge bei der Entfernungsmessung sind aus dem Impulsdiagramm von Fig. 2 zu erkennen. Dieses zeigt den elektrischen Sendeimpuls $I_S$, der unter Ausnutzung des Avalanchedurchbruchs bei Transistoren mit sehr steiler Anstiegsflanke erzeugt werden kann. Liegt die Anstiegszeit der Impulsflanke innerhalb der Lebensdauer der Elektronen in der aktiven Zone der Laserdiode 10, so hat auch der erzeugte Sendelichtimpuls $L_S$ eine sehr steile Anstiegsflanke, die um eine kleine, genau bekannte Verzögerungszeit der Anstiegsflanke des Stromimpulses $I_S$ nacheilt. Nach Durchlaufen der Meßstrecke gelangt der Empfangslichtimpuls $L_E$ zum Photodetektor 14. Der Zeitabstand zwischen den Vorderflanken der Lichtimpulse $L_S$ und $L_E$ bildet die wahre Meßzeit $T_M$, welche der zu messenden Entfernung proportional ist. Nach Verstärkung des vom Photodetektor 14 gelieferten Stromimpulses $I_E$ in dem Verstärker 15 begrenzter Bandbreite wird an dessen Ausgang ein Meßimpuls $I_M$ mit verschliffener Anstiegsflanke erhalten. Da die Kippschaltung 20 erst beim Erreichen eines bestimmten Schwellenwertes anspricht, hat der Tor impuls $I_T$ eine Dauer $T_M'$, die größer als die wahre Meßzeit $T_M$ ist. In die Torzeit $T_M'$ gehen auch die Zeitdifferenzen zwischen den Anstiegsflanken der Stromimpulse und der Lichtimpulse eine. Da diese Zeitdifferenzen konstant und genau bekannt sind, können sie bei der Zeitmessung berücksichtigt werden, so daß sie keinen Einfluß auf die Meßgenauigkeit haben. Das gleiche gilt für die durch die Abflachung der Anstiegsflanke des Meßimpulses $I_M$ bedingte Verlängerung der Torzeit $T_M'$, die ebenfalls bei der Auswertung der Zeitmessung berücksichtigt werden kann.

Eine Meßungenauigkeit ergibt sich dagegen aus der Abflachung der Anstiegsflanke in Verbindung mit dem überlagerten Rauschen infolge des geringen Pegels der Empfangssignale und der erforderlichen breitbandigen Verstärkung. In Fig. 2 ist das überlagerte Rauschen an der Anstiegsflanke des Meßimpulses $I_M$ angedeutet. Es hat zur Folge, daß der Schwellenwert durch die Summe aus Nutzsignal und Störsignal früher oder später überschritten werden kann als durch das reine Nutzsignal; dadurch ergibt sich ein Unsicherheitsbereich $\delta t$ in der Zeitmessung, der offensichtlich umso größer ist, je flacher die Anstiegsflanke des Meßimpulses verläuft und je größer das Rauschsignal im Verhältnis zum Nutzsignal ist.

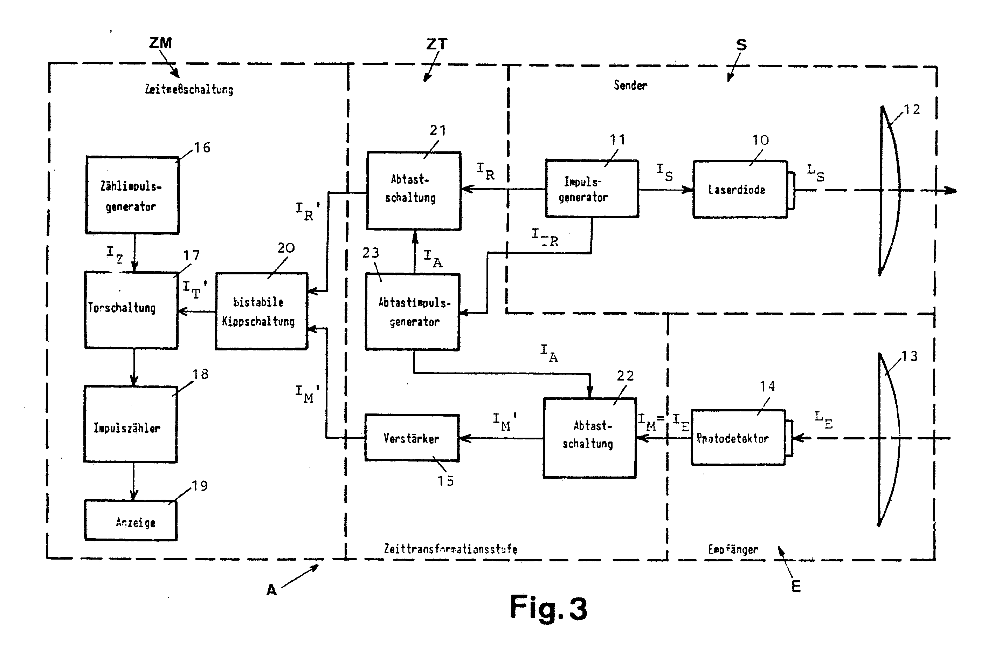

Fig. 3 zeigt ein Laser-Entfernungsmeßgerät, das eine bessere Entfernungsauflösung mit höherer Störsicherheit aufweist, so daß es auch größere Reichweiten zuläßt.

Das Entfernungsmeßgerät von Fig. 3 enthält wieder fast alle Bestandteile des Geräts von Fig. 1, die auch mit den gleichen Bezugszeichen bezeichnet sind. Ein wesentlicher Unterschied besteht jedoch darin, daß die Auswerteelektronik A zusätzlich zu der Zeitmeßanordnung ZM eine Zeittransformationsstufe ZT enthält welche die Referenzimpulse $I_R$ und die Meßimpulse $I_M$ empfängt, diese nach dem bekannten Sampling-Verfahren abtastet und am Ausgang zeittransformierte Referenzimpulse $I_R'$ und zeittransformierte Meßimpulse $I_M'$ zur Verfügung stellt, welche anstelle der ursprünglichen Impulse $I_R$ bzw. $I_M$ an die bistabile Kippschaltung angelegt werden, die einen entsprechend zeittransformierten Torimpuls $I_T'$ liefert. Die Zeitmeßanordnung ZM mißt daher den Zeitabstand zwischen den zeittransformierten Impulsen $I_R'$ und $I_M'$. Dieser Zeitabstand ist, ebenso wie die Impulse selbst, im Verhältnis des Zeittransformationsfaktors des Sampling-Verfahrens gedehnt.

Bekanntlich besteht das Sampling-Verfahren darin, daß aus jedem der periodisch aufeinanderfolgenden Impulse ein Abtastwert entnommen wird, wobei die zeitliche Lage der Abtastwerte in bezug auf die Impulsperiode von Impuls zu Impuls geringfügig verschoben ist. Diese Abtastung wird durch Abtastimpulse gesteuert, deren Periode um eine festgelegte, sehr kleine Zeitdifferenz größer ist als die Periode der abzutastenden Impulse. Jeder Abtastwert wird bis zur nächsten Abtastung gespeichert. Die aneinandergefügten Abtastwerte ergeben somit eine Abbildung der abgetasteten Impulse, jedoch in einem um den Zeittransformationsfaktor gedehnten Zeitmaßstab.

Zur Durchführung dieses Verfahrens enthält die Zeittransformationsstufe ZT zwei speichernde Abtastschaltungen 21, 22, beispielsweise nach Art der bekannten "Sample & Hold"-Schaltungen (Momentanwertspeicher), und einen Abtastimpulsgenerator 23, der die die Abtastung steuernden Abtastimpulse $I_A$ liefert. Die Abtastschaltung 21 empfängt die Referenzimpulse $I_R$ vom Impulsgenerator 11 und liefert die zeittransformierten Referenzimpulse $I_R'$. Die Abtastschaltung 22 empfängt die Meßimpulse $I_M$ und liefert die zeittransformierten Meßimpulse $I_M'$. Der Abtastimpulsgenerator 23 wird durch vom Impulsgenerator 11 gelieferte Triggerimpulse $I_{TR}$ synchronisiert, welche die gleiche Periode wie die Referenzimpulse $I_R$ haben.

Eine weitere Besonderheit des Entfernungsmeßgeräts von Fig. 3 besteht darin, daß die vom Photodetektor 14 gelieferten Stromimpulse $I_E$ nicht in einem Breitbandverstärker verstärkt werden, sondern unmittelbar als Meßimpulse $I_M$ der Abtastung unterworfen werden. Die zeittransformierten Meßimpulse $I_M'$ sind daher ein Abbild der unverzerrten Stromimpulse $I_E$. Der Verstärker 15 ist der Abtastschaltung 22 nachgeschaltet und braucht nur noch die zeittransformierten Meßimpulse $I_M'$ zu verstärken. Für eine verzerrungsfreie Verstärkung dieser zeittransformierten Meßimpulse $I_M'$ genügt eine geringe Bandbreite. Die Anstiegssteilheit, bezogen auf den gedehnten Zeitmaßstab, bleibt somit erhalten. Andrerseits wird durch die schmalbandige Verstärkung das Signal-/Rauschverhältnis erheblich verbessert. Beide Erscheinungen wirken im Sinne einer Verringerung der zuvor geschilderten Meßungenauigkeit zusammen.

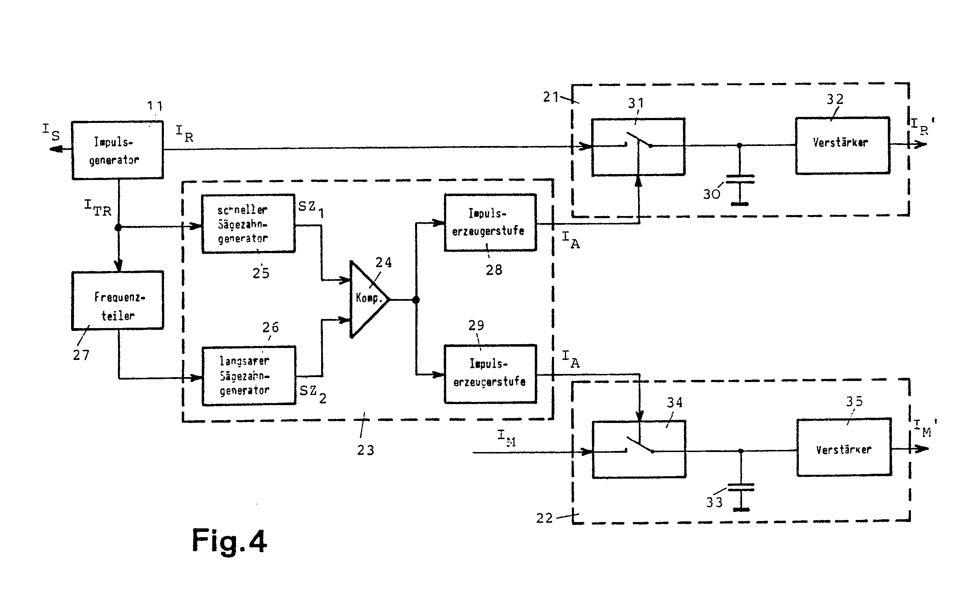

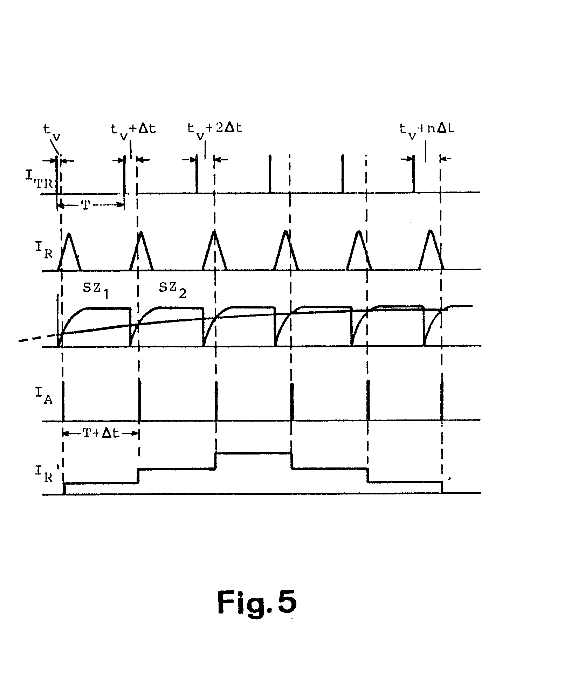

Fig. 4 zeigt das Schaltbild der Zeittransformationsstufe ZT in näheren Einzelheiten. Die Funktionsweise dieser Schaltung wird anhand der Zeitdiagramme von Fig. 5 erläutert.

Der Abtastimpulsgenerator 23 enthält einen Komparator 24, von dem ein Eingang mit dem Ausgang eines schnellen Sägezahngenerators 25 und der andere Eingang mit dem Ausgang eines langsamen Sägezahngenerators 26 verbunden ist. Der schnelle Sägezahngenerator 25 wird durch die Triggerimpulse $I_{TR}$ synchronisiert, so daß die Periode des Sägezahnsignals $SZ_1$ gleich der Periode der Referenzimpulse $I_R$ und somit auch gleich der Periode der Meßimpulse $I_M$ ist. Der langsame Sägezahngenerator 26 wird durch die Ausgangsimpulse eines Impulsfrequenzteilers 27 synchronisiert, der am Eingang die Triggerimpulse $I_{TR}$ empfängt und dessen Teilerfaktor in Abhängigkeit von dem Zeittransformationsfaktor so bemessen ist, daß die Periode des langsamen Sägezahnsignals SZ$_2$ gleich der Dauer eines vollständigen Abtastzyklus ist. Die Anstiegssteilheiten der Sägezahnsignale SZ$_1$ und ZS$_2$ sind natürlich derart verschieden, daß jeder Sägezahn am Ende seiner Periode eine vorgegebene Amplitude erreicht.

Die Sägezahngeneratoren 25 und 26 können linear ansteigende Sägezahnsignale erzeugen; vorzugsweise sind sie aber nach einem aus der DE—OS 27 29 331 bekannten Prinzip so ausgebildet, daß sie exponentiell ansteigende Sägezahnspannungen erzeugen. Jeder Sägezahngenerator kann dann eine einfache RC-Schaltung sein, die einen Kondensator enthält, der über einen Ladewiderstand von einer Gleichspannungsquelle aufgeladen wird und periodisch durch einen vom Synchronisationssignal betätigten Schalter entladen wird. Die Anstiegssteilheit der Sägezahnsignale wird in diesem Fall durch die Zeitkonstante der RC-Schaltungen bestimmt, die bei den beiden Sägezahngeneratoren 25, 26 entsprechend unterschiedlich bemessen werden muß.

In jedem Fall vergleicht der Komparator 24 die beiden Sägezahnspannungen SZ$_1$ und SZ$_2$, und er gibt jedesmal ein Signal ab, wenn die verglichenen Spannungen gleich groß sind Jedes Ausgangssignal des Komparators 24 löst zwei Impulserzeugerstufen 28, 29 aus, von denen dann jede einen kurzen Abtastimpuls I$_A$ erzeugt. Die Abtastimpulse I$_A$ der Impulserzeugerstufe 28 steuern die Abtastschaltung 21, und die Abtastimpulse I$_A$ der Impulserzeugerstufe 29 steuern die Abtastschaltung 22.

Die Abtastschaltung 21 enthält nach Art der bekannten "Sample & Hold"-Schaltungen einen Speicherkondensator 30, der über einen durch die Abtastimpulse I$_A$ gesteuerten elektronischen Schalter 31 mit der die Referenzimpulse I$_R$ führenden Leitung verbunden ist. Der Schalter 31 ist normalerweise offen und wird für die Dauer jedes Abtastimpulses I$_A$ kurzzeitig geschlossen, so daß der Speicherkondensator 30 dann eine Ladespannung annimmt, die dem Momentanwert des Referenzimpulses entspricht. Ein Verstärker 32 verstärkt die am Speicherkondensator 30 bestehende Spannung. Er dient zugleich als Trennstufe, die ein Entladen des Kondensators über den Ausgangskreis verhindert, so daß die gespeicherte Spannung zwischen zwei aufeinanderfolgenden Abtastungen im wesentlichen erhalten bleibt. Ferner unterdrückt der Verstärker 32 infolge seiner geringen Bandbreite alle Rauschsignale und höherfrequenten Signalkomponenten.

In gleicher Weise enthält die Abtastschaltung 22 einen Speicherkondensator 33, einen elektronischen Schalter 34 und einen Verstärker 35.

Fig. 5 zeigt in der obersten Zeile die Triggerimpulse I$_{TR}$, die einerseits im Impulsgenerator die Erzeugung der Sendeimpulse I$_S$ und der Referenzimpulse I$_R$ auslösen und andrerseits zur Synchronisation des Abtastimpulsgenerators 23 dienen. Jeder Triggerimpuls löst im schnellen Sägezahngenerator 25 die Erzeugung einer exponentiell ansteigenden Flanke des Sägezahnsignals SZ$_1$ aus. Der Komparator 25 vergleicht die ansteigenden Flanken des Sägezahnsignals SZ$_1$ mit der sehr langsam exponentiell ansteigenden Flanke des Sägezahnsignals SZ$_2$ und löst bei Feststellung der Gleichheit die Erzeugung eines Abtastimpulses I$_A$ aus. Infolge des langsamen Anstiegs des Sägezahnsignals SZ$_2$ verschieben sich die Zeitpunkte der Erzeugung der Abtastimpulse von Periode zu Periode jeweils um ein kleines Zeitintervall $\Delta t$ in bezug auf den durch einen Triggerimpuls I$_{TR}$ bestimmten Anfang der Periode. Wenn also die Triggerimpulse I$_{TR}$ und somit auch die Sendeimpulse I$_S$, die Referenzimpulse I$_R$, die Meßimpulse I$_M$ und das Schnelle Sägezahnsignal ZS$_1$ die Periode T haben, haben die Abtastimpulse I$_A$ die Periode T+$\Delta t$. Wie in der zuvor erwähnten DE—OS 27 29 331 nachgewiesen worden ist, ist diese Bedingung bei exponentiellen Sägezahnsignalen ebenso exakt erfüllt wie bei linearen Sägezahnsignalen.

Die Abtastimpulse I$_A$ bewirken also die Abtastung der Referenzimpulse I$_R$ in Zeitpunkten, die von Periode zu Periode jeweils um das Zeitintervall $\Delta t$ gegenüber dem der vorhergehenden Abtastung entsprechenden Zeitpunkt verschoben sind. Der Speicherkondensator 30 nimmt daher nacheinander Spannungen an, die verschiedenen, in gleichen Abständen aufeinanderfolgenden Momentanwerten des Referenzimpulses entsprechen. Diese Abtastwerte stellen daher eine Nachbildung des Referenzimpulses in Form einer Treppenkurve dar, die umso genauer ist, je größer die Anzahl der Abtastwerte ist, die für eine vollständige Abtastung der Impulskurve verwendet werden, d.h. je kleiner das Zeitintervall $\Delta t$ ist. Diese Anzahl der verwendeten Abtastwerte bestimmt zugleich den Zeittransformationsfaktor, denn bei n Abtastwerten hat der zeittransformierte Impuls I$_R'$ eine Dauer von n Perioden der abgetasteten Impulse I$_R$. Der Zeittransformationsfaktor beträgt:

$$K_t = \frac{T+\Delta t}{\Delta t} \approx \frac{T}{\Delta t} = n.$$

In Fig. 5 ist das Zeitintervall $\Delta t$ der Deutlichkeit wegen übertrieben groß dargestellt. Bei einer praktischen Ausführung des beschriebenen Meßgeräts beträgts die Folgefrequenz der Sendeimpulse 10 kHz; eine so hohe Folgefrequenz ist erforderlich, damit ein Abtastzyklus nicht zu lange dauert. Die Periode T beträgt in diesem Fall 100 $\mu$s. Das Zeitintervall $\Delta t$ wurde zu 66,7 ps gewählt, damit eine Entfernungsauflösung von 1 cm gewährleistet ist. Daraus ergibt sich der Zeittransformationsfaktor.

$$K_t = 1,5 \cdot 10^6.$$

Dies bedeutet, daß eine Zeitdifferenz von 1 ns auf 1,5 ms abgebildet wird. Bei einer Impulsanstiegszeit von etwa 500 ps im Echtzeitbereich ergibt sich nach der Zeittransformation eine Anstiegszeit von 0,75 ms.

Wird für eine Signalaufbereitung im Echtzeitbereich eine Bandbreite von mindestens 700 MHz benötigt, so genügt im zeittransformierten Bereich eine Bandbreite von 1 kHz.

Ein Vorteil des beschriebenen Laser-Entfernungsmeßgeräts ergibt sich daraus, daß die beiden Abtastkanäle für die Referenzimpulse und die Meßimpulse vollkommen gleich aufgebaut sind. Dadurch wirken sich Umgebungseinflüsse, insbesondere Temperaturänderungen, in gleicher Weise auf die beiden Kanäle aus, so daß sich ihre Auswirkungen im Meßergebnis gegenseitig aufheben.

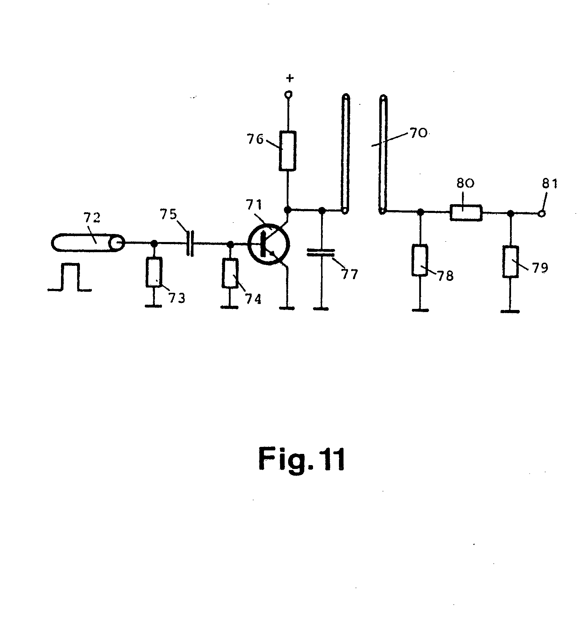

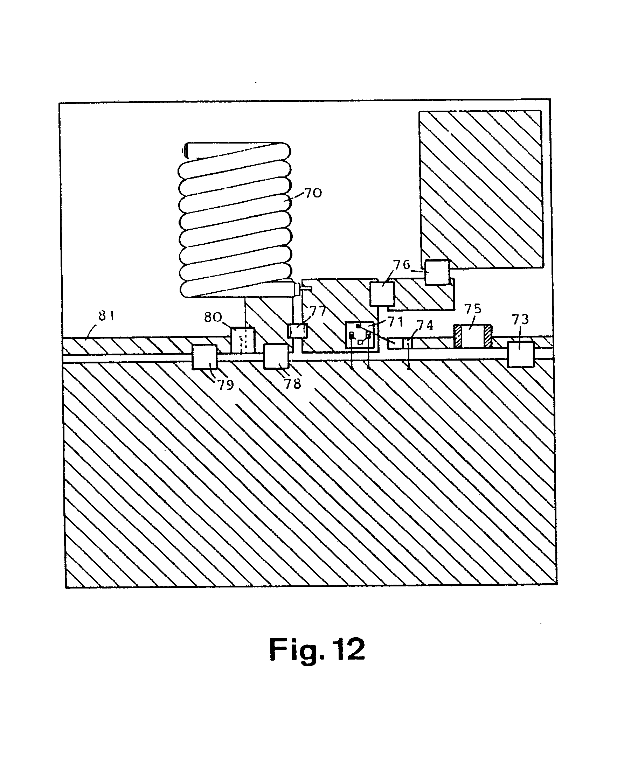

Die Impulserzeugerstufen 28 und 29 sind vorzugsweise Avalanche - Impulsgeneratoren, bei denen der Avalanche-Effekt von Transistoren ausgenutzt wird. Da die charackteristischen Kenndaten, insbesondere die Temperaturabhängigkeit solcher im allgemeinen außerhalb des sogenannten Sicherheitsbereichs arbeitander Transistoren recht unterschiedlich ausfallen, werden die Avalanche-Impulsgeneratoren, wie später anhand der Figuren 11 und 12 erläutert wird, weitgehend als integrierte Hybridschaltungen aufgebaut, wobei Transistoren in Form von Chips eines Wafers mit gleichen elektrischen Eigenschaften verwendet werden.

Es wäre auch möglich, die beiden Impulserzeugerstufen 28 und 29 durch eine einzige Stufe zu ersetzen, deren Ausgangsimpulse zur Ansteuerung der beiden Abtastschaltungen 21 und 22 verwendet werden.

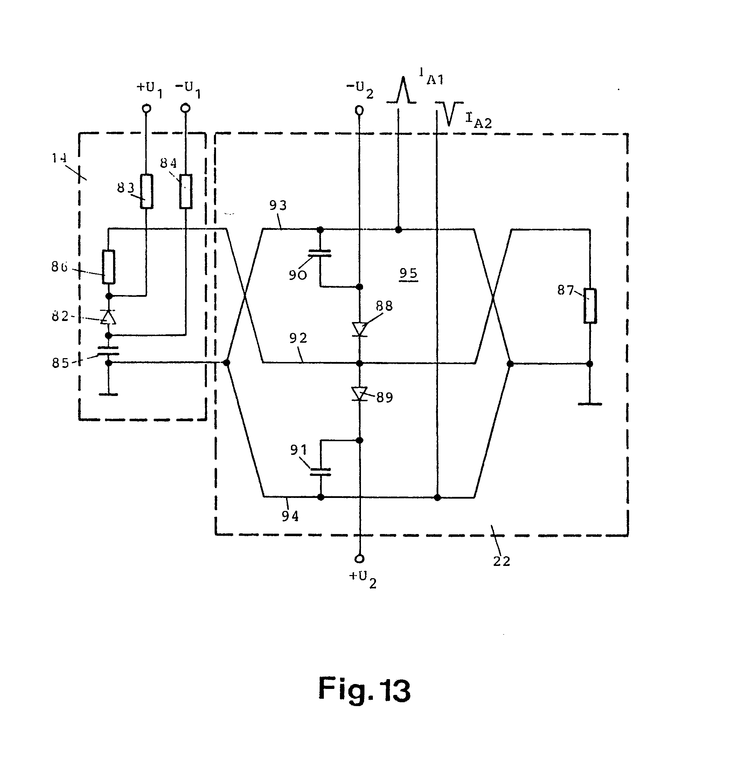

Die Abtastschaltungen 21 und 22 sind, wie später anhand der Figuren 13 bis 15 erläutert wird, bei einer bevorzugten Ausführungsform durch Sampling-Brücken gebildet, die gleichfalls als integrierte Hybridschaltungen ausgebildet sind. Die für solche Sampling-Brücken benötigten Gegentakt-Abtastimpulse werden aus den von den Avalanche-Impulsgeneratoren gelieferten Abtastimpulsen einer Polarität mit Hilfe einer kurzgeschlossenen Schlitzleitung gewonnen. Die durch die Schlitzleitung bewirkte Impulsformung ergibt schmale Impulse mit sehr kurzer Anstiegszeit.

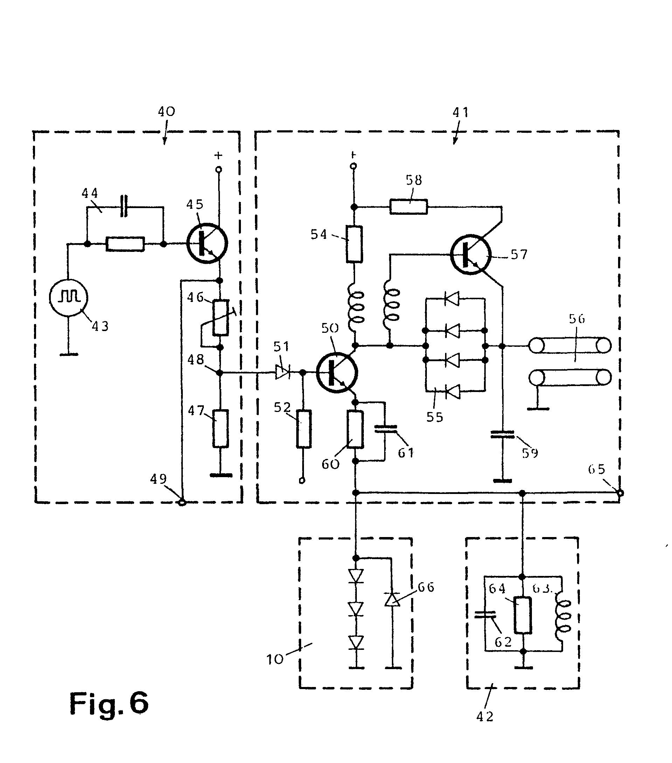

Fig. 6 zeigt das Schaltbild einer Ausführungsform des Impulsgenerators 11. Er besteht aus einem Triggerimpulsgenerator 40, einem Avalanche-Impulsgenerator 41 und einer Impulsformerstufe 42 zur Erzeugung der Referenzimpulse. Ferner ist die als Stack ausgebildete Halbleiter-Laserdiode 10 gezeigt.

Wie bereits erwähnt, wird zur Vermeidung einer zu großen Dauer des Abtastzyklus eine verhältnismäßig große Folgefrequenz der Sendeimpulse angewendet. Die Folgefrequenz kann bis zu 100 kHz betragen, wobei das maximal zulässige Tastverhältnis der Laserdioden zu beachten ist. Bei dem zuvor erwähnten praktischen Ausführungsbeispiel beträgt die Folgefrequenz 10 kHz. Die erzeugten Lichtimpulse weisen im allgemeinen eine Impulsbreite von $\leqslant 5$ ns auf. Nach jedem Abtastzyklus der Dauer $T_A$ wird der Sender für eine Zeitspanne $T_R$ in Ruhestellung gebracht und anschließend erneut aktiviert. Die Ruhepause ergibt auch eine Entlastung des Avalanche-Transistors.

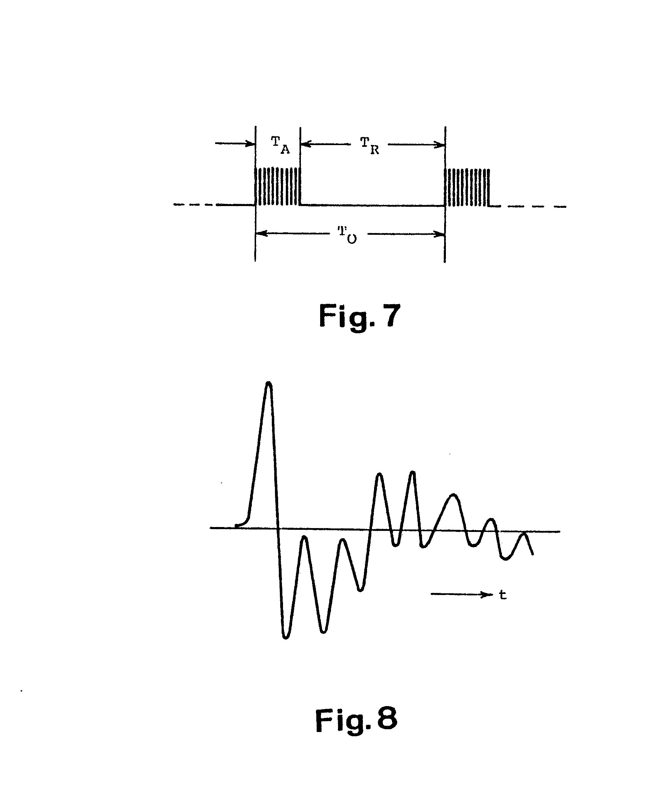

Dementsprechend enthält der Triggerimpulsgenerator 40 eine Impulserzeugerstufe 43, die beispielsweise in C-MOS-Technik aufgebaut ist und Spannungsimpulse mit einer Amplitude von +12 V gemäß dem in Fig. 7 dargestellten zeitlichen Verlauf liefert. In einem periodischen Zyklus wird in jeder Periode der Dauer $T_O$, die der Periode der langsamen Sägezahnspannung entspricht, während eines Zeitintervalls $T_A$, das der Dauer eines vollständigen Abtastzyklus der Zeittransformationsstufe ZT entspricht, eine Impulsfolge mit der Folgefrequenz 10 kHz erzeugt, und daran schließt sich eine Ruhepause der Dauer $T_R$ an. Der Ausgang der Impulserzeugerstufe 43 ist über ein RC-Glied 44 mit der Basis eines als Emitterfolger geschalteten Transistors 45 verbunden, in dessen Emitterkreis eine aus einem einstellbaren Widerstand 46 und einem Festwiderstand 47 gebildeter Spannungsteiler liegt. Die am Abgriff 48 des Spannungsteilers abgegriffenen Triggerimpulse dienen zur Ansteuerung des Avalanche-Impulsgenerators 41. Der Widerstand 46 ermöglicht die Einstellung der erforderlichen Triggerimpulsamplitude. Die am Emitter des Transistors 45 abgegriffenen Triggerimpulse stehen außerdem an einer Klemme 49 für die Synchronisation des Abtastimpulsgenerators 23 zur Verfügung. Der Emitterfolger ist niederohmig ausgelegt; der Festwiderstand 47 hat einen Wert von 15 Ohm.

Der Avalanche-Impulsgenerator 41 enthält einen Avalanche-Transistor 50, an dessen Basis die am Abgriff 48 abgenommenen Triggerimpulse über eine Diode 51 angelegt werden. Die Basis ist über einen Widerstand 52 negativ vorgespannt, um eine hohe Durchbruchspannung zu gewährleisten.

Der Kollektor des Avalanche-Transistors 50 ist einerseits über einen Widerstand 54 mit der positiven Versorgungsspannungsklemme verbunden, und andrerseits über eine Diodengruppe 55 von mehreren parallelen Schaltdioden mit der Ladeleitung 56. Die Aufladung der Ladeleitung 56 erfolgt über einen Ladetransistor 57, dessen Kollektor über einen den Ladestrom begrenzenden niederohmigen Ladewiderstand 58 mit der positiven Versorgungsspannungsklemme verbunden ist. Die Basis des Ladetransistors 57 ist mit dem Kollektor des Avalanche-Transistors 50 verbunden, wobei die Verbindungsleitung als Induktivität wirkt. Ein zwischen der Ladeleitung 56 und masse angeschlossener Kondensator 59 dient zur Impulsversteilung und begünstigt das Durchschalten des Avalanche-Transistors 50. Die negative Vorspannung der Basis des Avalanche-Transistors 50 beseitigt im übrigen auch die Gefahr eines Durchbruchs über den niederohmigen Ladewiderstand 58, den Ladetransistor 57 und die Schaltdiodengruppe 55.

Die Ladeleitung 56 ist als Bandleitung ausgeführt, die aus Gründen der Platzsparnis aufgewickelt ist. Polyesterfolie bzw. Polyimidfolien als Dielektrikum mit Stärken von 100 $\mu$m oder weniger ermöglichen die Realisierung von Wellenwiderständen von 2 Ohm oder weniger bei Bandbreiten von nur etwa 6 mm.

Die als Stack mit gegenparallel geschalteter Diode 66 ausgebildete Laserdiode 10 ist über einen Widerstand 60 mit dem Emitter des Avalanche-Transistors 50 verbunden. Der Widerstand 60 ist dem Wellenwiderstand der Ladeleitung 56 näherungsweise angepaßt. Eine dem Widerstand 60 parallelgeschaltete Kapazität 61 ermöglicht eine zusätzliche Stromimpulsformung: im Zeitpunkt des Durchschaltens wird der Widerstand 60 kapazitiv überbrückt, so daß an der Laserdiode 10 eine höhere Spannung anliegt, was einen größeren Impulsstrom zur Folge hat.

Die Impulsformerstufe 42 ist parallel zur Laserdiode 10 angeschlossen. Sie enthält einen Parallelschwingkreis mit einer Kapazität 62, einer Induktivität 63 und einem Dämpfungswiderstand 64, der im allgemeinen durch den Wellenwiderstand der Auskoppelleitung gebildet ist. Die Referenzimpulse stehen an der Klemme 65 zur Verfügung und haben den in Fig. 8 dargestellten zeitlichen Verlauf. Das Überschwingen ist bedeutungslos, da es für die Zeitmessung nur auf die ansteigende Vorderflanke ankommt. Die Referenzimpulse sind sehr stabil, so daß der Startzeitpunkt der Zeitmessung nach der Zeittransformation mit Hilfe einer einfachen und preiswerten Schwellenwerterfassung festgelegt werden kann.

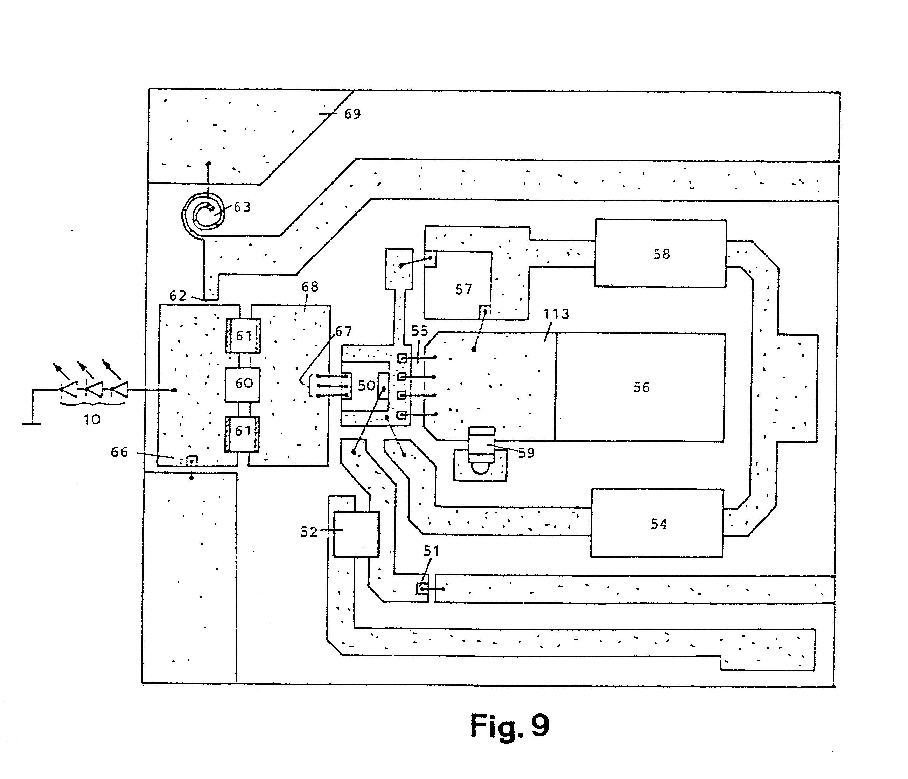

Fig. 9 zeigt eine praktische Ausführung des Avalanche-Impulsgenerators 41 von Fig. 6 in Form einer integrierten Hybridschaltung. Die verschiedenen Bestandteile sind mit den gleichen Bezugszeichen wie in Fig. 6 bezeichnet.

Die dargestellte praktische Ausführung benötigt einen Platzbedarf von nur 21 mm×25 mm. Der Ladetransistor 57 und der Avalanche-Transistor 50 sind als Chip eingesetzt, was wesentlich zu einem kompakten Aufbau beiträgt. Insbesondere lassen sich mit der Bond-Technik die Leitungslängen im Entladekreis extrem kurz halten. Zur Verringerung der Induktivität ist der Emitter des Avalanche-Transistors 50 durch mehrere Bond-Drähte 67 mit dem Leiterstück 68 verbunden. Diese könnten auch durch ein breites metallisches Band ersetzt werden, das die Verbindung zwischen dem Emitter und dem Leiterstück 68 schafft. Aufgrund des planaren Aufbaues lassen sich parasitäre induktive Effekte weitgehend vermeiden. Die zur Erzeugung des Referenzsignals dienende Impulsformerschaltung 42 besteht aus der durch einen Schlitz gebildeten Kapazität 62 und einer spiralförmig ausgebildeten schmalen Bandleitung als Induktivität 63, die durch einen Bond-Draht mit der Massefläche 69 verbunden ist.

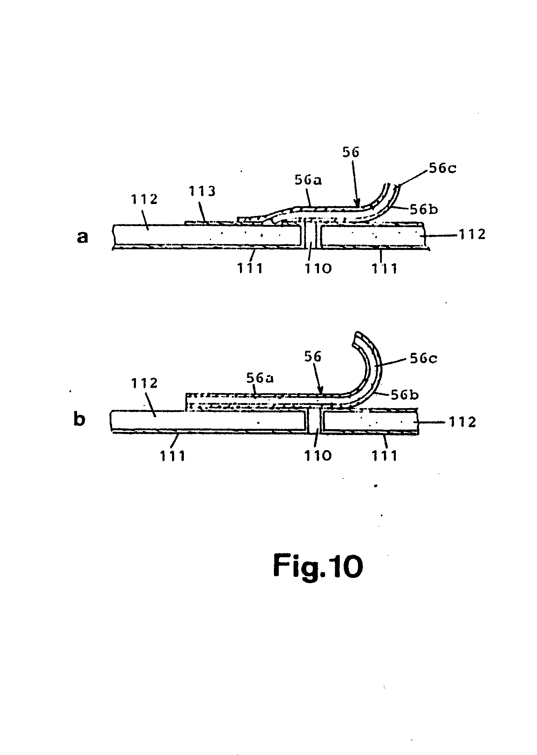

Fig. 10 zeigt verschiedene Lösungsmöglichkeiten für die Verbindung der Ladeleitung 56 mit der integrierten Schaltung. Die Ladeleitung 56 ist als Bandleitung mit zwei Bandleitern 56a, 56b und einem Dielektrikum 56c ausgebildet. Bei den beiden in Fig. 10a und 10b gezeigten Ausführungsformen ist der Bandleiter 56b durch eine metallisierte Durchführung 110 mit der Masseebene 111 verbunden, die durch die metallisierte Unterseite des Substrats 112 der in Fig. 9 dargestellten integrierten Schaltung gebildet ist. Bei der Ausführungsform von Fig. 10a ist der andere Bandleiter 56a mit einem Leiterstück 113 verbunden (Fig. 9). Bei der Ausführungsform von Fig. 10b erfolgt das Kontaktieren des Kondensators 59 sowie der Bond-Drähte vom Transistor 57 und der Diodengruppe 55 direkt auf dem Bandleiter 56a der Ladeleitung 56.

Fig. 11 zeigt das Schaltbild eines Avalanche-Impulsgenerators mit einer erdsymmetrischen Ladeleitung 70, der insbesondere für die Impulserzeugerstufen 28, 29 des Abtastimpulsgenerators 23 geeignet ist. Er enthält einen Avalanche-Transistor 71, dessen Basis mit der Eingangsleitung 72 über ein Eingangsnetzwerk aus zwei Widerständen 73, 74 und einem Kondensator 75 verbunden ist. Der Kollektor des Avalanche-Transistors 71 ist mit dem einen Leiter der Ladeleitung 70 und über einen Widerstand 76 mit der positiven Versorgungsspannungsklemme verbunden. Ein zwischen dem Kollektor und Masse angeschlossener Kondensator 77 dient der Impulsversteilerung. Der andere Leiter der Ladeleitung 70 ist über ein Widerstandsnetzwerk aus drei Widerständen 78, 79, 80 mit der Ausgangsklemme 81 verbunden. Alle Leitungen haben einen Wellenwiderstand von 50 Ohm. Das Widerstandsnetzwerk 78, 79, 80 stellt ein Dämpfungsglied dar. Aus Anpassungsgründen müssen die Eingangsimpedanz des Eingangsnetzwerks 73, 74, 75 und die Eingangs- und Ausgangsimpedanz des Ausgangsnetzwerks 78, 79, 80 einen Wert von 50 Ohm haben.

Fig. 12 zeigt eine praktische Ausführung des Avalanche-Impulsgenerators von Fig. 11 in Form einer integrierten Hybridschaltung, wobei die Bestandteile mit den gleichen Bezugszeichen bezeichnet sind. Aus Gründen der Platzersparnis ist die Ladeleitung 70 schraubenförmig aufgewickelt.

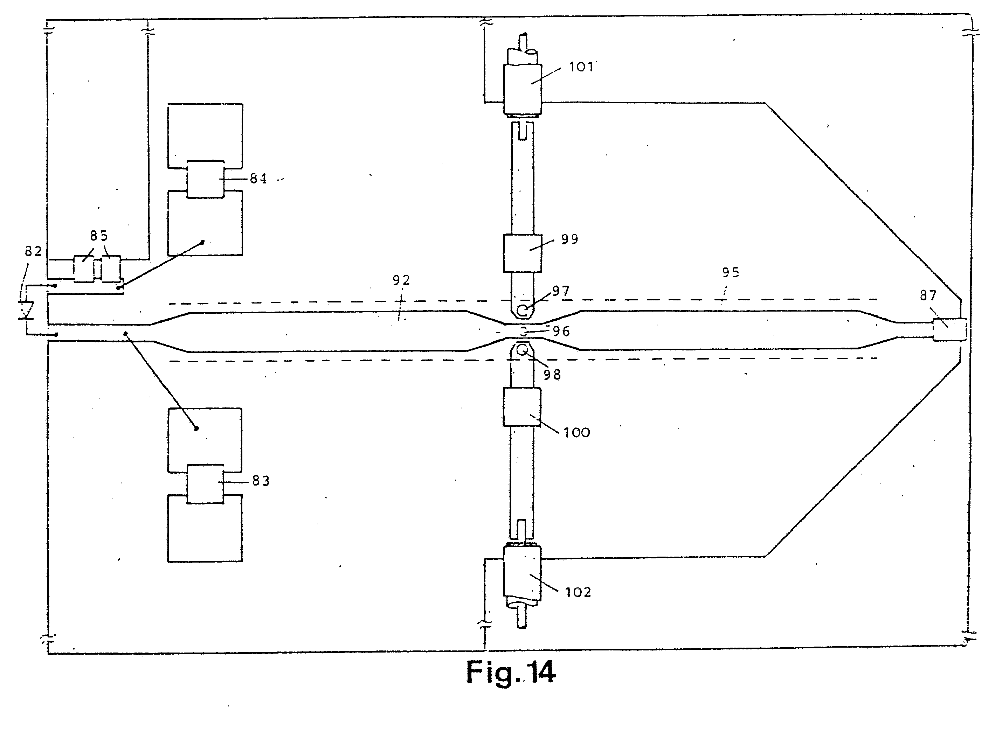

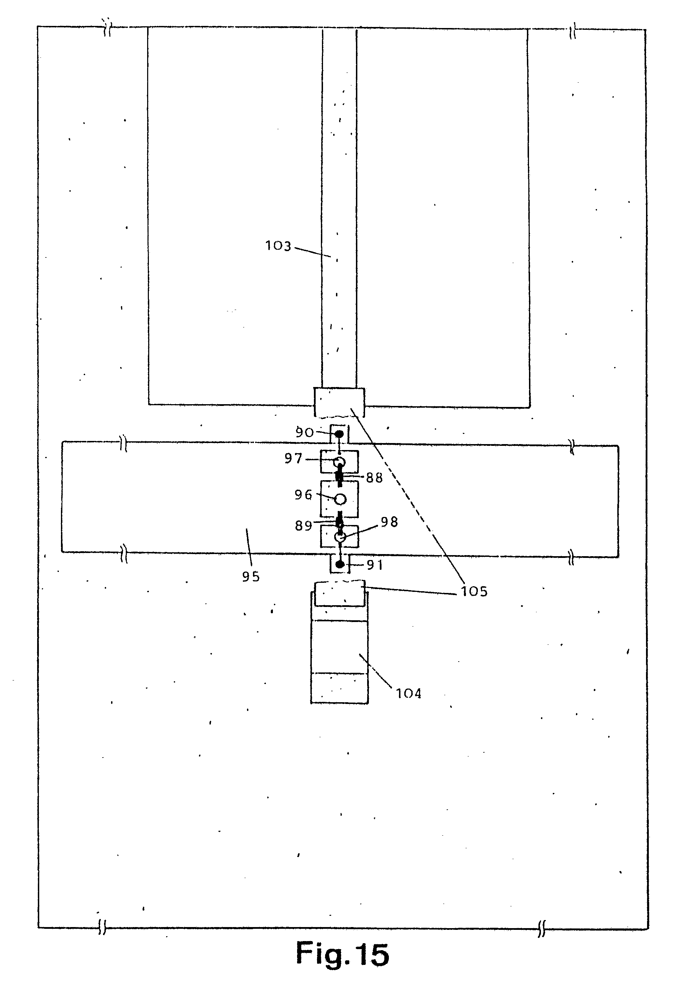

Die Figuren 14 und 15 zeigen eine praktische Ausführung des Photodetektors 14 und der sich unmittelbar anschließenden Abtastschaltung 22 der Zeittransformationsstufe ZT in Form einer integrierten Hybridschaltung. Fig. 13 zeigt schematisch das Ersatzschaltbild dieser Anordnung. Die Photodiode 82 ist über zwei Widerstände 83, 84 durch eine Gleichspannung $U_1$ in der Sperrichtung vorgespannt und durch einen Kondensator 85 gegen Masse gleichstrommäßig entkoppelt. Für schnelle Impulse stellt der Kondensator 85 einen Kurzschluß dar. Der Widerstand 86 stellt den Ausgangswiderstand des Photodetektors dar, über den die Photodiode 82 mit der Abtastschaltung 22 verbunden ist. Die Abtastschaltung ist als Sampling-Brücke ausgebildet, die aus einer am Ende durch einen Widerstand 87 reflexionsfrei abgeschlossenen Mikrostripleitung 92 und einer parallel dazu verlaufenden Schlitzleitung 95 aufgebaut ist. Die Sampling-Brücke enthält zwei Dioden 88, 89, die durch eine Gleichspannung $U_2$ in der Sperrichtung vorgespannt sind, und zwei Kondensatoren 90 und 91. Die Diode 88 und der Kondensator 90 liegen in Reihe zwischen der Mikrostripleitung 92 und einen Seite 93 der Schlitzleitung 95, und die Diode 89 und der Kondensator 91 liegen in Reihe zwischen der Mikrostripleitung 92 und der anderen Seite 94 der Schlitzleitung 95.

Wenn ein am Zeilobjekt relektierter Echoimpuls auf die Photodiode 82 trift, schickt diese einen entsprechenden Stromimpuls über die Sampling-Brücke. zur Abtastung dieses Stromimpulses werden die Dioden 88, 89 durch mit Hilfe der Schlitzleitung 95 erzeugte Gegentakt-Abtastimpulse $I_{A1}$, $I_{A2}$ kurzzeitig geöffnet. Je nach der Polarität des Meßsignals wird ein Abtastwert auf dem Kondensator 90 oder dem Kondensator 91 gespeichert.

Fig. 14 zeigt die Oberseite und Fig. 15 die Unterseite des Subtrats der Hybridschaltung.

Bei dieser Ausführungsform werden die Gegentakt-Abtastimpulse $I_{A1}$ und $I_{A2}$ durch eine kurzgeschlossene Schlitzleitung erzeugt, wie von J. Merkelo und R. D. Hall in der Zeitschrift "IEEE-Journal of Solid-State Circuits SC-7" (1972), Seiten 50 bis 54 beschrieben ist.

In Fig. 14 ist die Photodiode 82 zu erkennen, die mit der am Ende durch den Widerstand 87 reflexionsfrei abgeschlossenen Mikrostripleitung 92 verbunden ist, über die der abzutastende Stromimpuls läuft. Die Widerstände 83, 84 und der Kondensator 85 des Photodetektors sind als Bestandteile der integrierten Hybridschaltung gebildet. Auf diese Weise ist der Photodetektor unmittelbar mit der Zeittransformationsstufe zusammengefügt, wodurch das Einkoppeln von Störsignalen vermieden wird. Die Schlitzleitung 95 verläuft parallel unter der Signalleitung 92 auf der anderen Seite des Substrats der integrierten Schaltung. Fig. 15 zeigt der Deutlichkeit wegen nur den Mittelteil und die beiden Endteile des Schlitzes 95 in größerem Maßstab. Die Dioden 88, 89 sind in Beam-Lead-Technik ausgeführt und im Schlitz 95 angeordnet. Sie sind einerseits durch eine metallische Durchführung 96 mit der Mikrostripleitung 92 und andrerseits über Bond-Drähte mit den in Dünnfilm-Technik ausgebildeten Kondensatoren 90, 91 verbunden. Die Verbindungspunkte zwischen den Dioden 88, 89 und den Kondensatoren 90, 91 sind über weitere metallische Durchführungen 97 bzw. 98 und über auf der Oberseite des Substrats (Fig. 14) angeordnete hochohmige Widerstände 99, 100 mit koaxialen Ausgängen 101, 102 verbunden, über welche das an den Kondensatoren anliegende Signal zu einem Verstärker mit hohem Eingangswiderstand übertragen wird.

Für jeden Abtastvorgang legt ein Avalanche-Impulsgenerator, der beispielsweise die in Fig. 11 und 12 dargestellte Ausbildung hat, einen negativen Spannungssprung an eine auf der Unterseite des Substrats angeordnete Mikrostripleitung 103 (Fig. 15) an, die den impulsformenden Schlitz 95 auf der Höhe der Dioden 88, 89 kreuzt und durch einen Widerstand 104 reflexionsfrei abgeschlossen ist. Der Schlitz 95 ist durch ein metallisches Band 105 überbrückt. Es ist bekannt, daß die Schlitzleitung aufgrund ihrer Feldkonfiguration am günstigsten angeregt werden kann, wenn sie senkrecht zur Ausbreitungsrichtung der Quasi-TEM-Welle auf der Mikrostripleitung verläuft. Die Länge der über dem Schlitz angeregten Spannungsimpulse läßt sich durch die Länge der Schlitzleitung festlegen. Durch die dargestellte Anordnung der Mikrostripleitung 92, der Schlitzleitung 95 und der Mikrostripleitung 103 sind die Abtastimpulse und der abzutastende Meßimpuls bzw. Referenzimpuls voneinander entkoppelt.

## Patentansprüche

1. Entfernungsmeßgerät nach dem Impulslaufzeitverfahren mit einem Lichtimpulserzeuger (10) zu Erzeugung periodischer Sende-Lichtimpulse ($L_S$), einer Sendeoptik (12) zum Aussenden der Sende-Lichtimpulse ($L_S$), einer Empfangsoptik (13) zum Empfang der durch Reflexion der Sende-Lichtimpulse ($L_S$) am Maßobjekt erzeugten Echo-Lichtimpulse ($L_E$), einem photoelektrischen Wandler (14) zur Umwandlung der Echo-Lichtimpulse ($L_E$) in elektrische Meßimpulse ($I_M$) und mit einer Zeitmeßanordnung (ZM) zur Messung des Zeitabstands zwischen einander entsprechenden Flanken jedes Meßimpulses ($I_M$) und eines in vorgegebener zeitlicher Beziehung zu dem ihm zugeordneten Sende-Lichtimpuls stehenden elektrischen Referenzimpulses ($I_R$), dadurch gekennzeichnet, daß eine nach dem Sampling-Verfahren arbeitende Zeittransformationsstufe (ZT) vorgesehen ist, die einen Abtastimpulsgenerator (23) zur Erzeugung periodischer Abtastimpulse ($I_A$), deren Periode von der Periode der Sende-Lichtimpulse ($L_S$) geringfügig verschieden ist, eine Abtastschaltung (21) für die Referenzimpulse ($I_R$) und eine Abtastschaltung (22) für die Meßimpulse ($I_M$) enthält und durch Abtastung einer großen Anzahl aufeinanderfolgender Impulse mittels der Abtastimpulse ($I_A$) zeittransformierte Referenzimpulse ($I_R'$) und zeittransformierte Meßimpulse ($I_M'$) erzeugt, daß die Meßimpuls-Abtastschaltung (22) für die Abtastung kleiner und verrauschter Signale ausgebildet ist und die elektrischen Ausgangssignale ($I_E$) des photoelektrischen Wandlers (14) ohne vorhergehende Verstärkung empfängt, und daß die Zeitmeßanordnung (ZM) den Zeitabstand zwischen einander entsprechenden Flanken der zeittransformierten Impulse ($I'_R$, $I'_M$) mißt.

2. Entfernungsmeßgerät nach Anspruch 1, dadurch gekennzeichnet, daß jede Abtastschaltung (21, 22) als Sampling-Brücke (88, 89, 90, 91, 92, 93, 94, 95) ausgebildet ist, die durch schmale Gegentakt-Abtastimpulse gesteuert wird.

3. Entfernungsmeßgerät nach Anspruch 2, dadurch gekennzeichnet, daß die Sampling-Brücke (88, 89, 90, 91, 92, 93, 94, 95) als integrierte Hybridschaltung aufgebaut ist (Fig. 14, 15).

4. Entfernungsmeßgerät nach Anspruch 3, dadurch gekennzeichnet, daß die integrierte Hybridschaltung eine am Ende reflexionsfrei abgeschlossene erste Mikrostripleitung (92) enthält, über welche die abzutastenden Impulse übertragen werden, daß parallel zu der Mikrostripleitung (92) eine kurzgeschlossene Schlitzleitung (95) verläuft, daß eine am Ende reflexionsfrei abgeschlossene zweite Mikrostripleitung (103), über welche zur Erzeugung der schmalen Gegentakt-Abtastimpulse die vom Abtastimpulsgenerator (23) gelieferten Abtastimpulse einer Polarität übertragen werden, die Schlitzleitung (95) kreuzt, daß an der Kreuzungsstelle im Schlitz (95) zwei in der Sperrichtung vorgespannte Dioden (88, 89) angeordnet sind, welche gegenpolig zwischen der ersten Mikrostripleitung (92) und je einem Kondensator (90, 91) angeschlossen sind, dessen andere Elektrode mit dem Masseleiter auf der einen bzw. anderen Seite des Schlitzes (95) verbunden ist, und daß die Verbindungsstellen zwischen den Dioden (88, 89) und den Kondensatoren (90, 91) jeweils mit einem Ausgangsleiter (101, 102) zur Abnahme des am Kondensator (90, 91) auftretenden Signals verbunden sind (Fig. 14, 15).

5. Entfernungsmeßgerät nach Anspruch 3 oder 4, dadurch gekennzeichnet, daß der photoelektrische Wandler (14) eine Photodiode (82) aufweist, die unmittelbar an der integrierten Hybridschaltung montiert ist (Fig. 14).

6. Entfernungsmeßgerät nach Anspruch 5, dadurch gekennzeichnet, daß die zur Vorspannung der Photodiode (82) erforderlichen Schaltungsteile (83, 84, 85) des photoelektrischen Wandlers (14) als Bestandteile der integrierten Hybridschaltung ausgebildet sind (Fig. 14).

7. Entfernungsmeßgerät nach einem der Ansprüche 1 bis 6, dadurch gekennzeichnet, daß der Abtastimpulsgenerator (23) wenigstens eine als Avalanche-Impulsgenerator mit einem Avalanche-Transistor (71) und einer Ladeleitung (70) ausgebildete Impulserzeugerstufe enthält (Fig. 11).

8. Entfernungsmeßgerät nach Anspruch 7, dadurch gekennzeichnet, daß der Abtastimpulsgenerator (23) für jede Abtastschaltung (21, 22) eine eigene Impulserzeugerstufe (28, 29) enthält (Fig. 4).

9. Entfernungsmeßgerät nach Anspruch 7 oder 8, dadurch gekennzeichnet, daß jeder Avalanche-Impulsgenerator (70, 71) als integrierte Hybridschaltung ausgebildet ist, und daß die Ladeleitung (70) durch eine Bandleitung gebildet ist (Fig. 12).

10. Entfernungsmeßgerät nach Anspruch 9, dadurch gekennzeichnet, daß die Bandleitung (70) aufgewickelt ist (Fig. 12).

11. Entfernungsmeßgerät nach einem der vorhergehenden Ansprüche, dadurch gekennzeichnet, daß der die Sendeimpulse ($L_S$) liefernde Lichtimpulserzeuger (10, 11) intermittierend in durch Ruhepausen ($T_R$) unterbrochenen Arbeitszyklen ($T_A$) arbeitet (Fig. 7).

12. Entfernungsmeßgerät nach Anspruch 11, dadurch gekennzeichnet, daß die Dauer jedes Arbeitszyklus ($T_A$) etwa gleich der Dauer eines Abtastzyklus des Sampling-Verfahrens ist.

13. Entfernungsmeßgerät nach einem der Ansprüche 1 bis 12, dadurch gekennzeichnet, daß der Lichtimpulserzeuger (10, 11) einen Avalanche-Impulsgenerator (41) mit einem Avalanche-Transistor (50) und einer Ladeleitung (56) enthält (Fig. 6).

14. Entfernungsmeßgerät nach Anspruch 13, dadurch gekennzeichnet, daß die Basis des Avalanche-Transistors (50) negativ vorgespannt ist (Fig. 6).

15. Entfernungsmeßgerät nach Anspruch 13 oder 14, dadurch gekennzeichnet, daß der Avalanche-Impulsgenerator (41) als integrierte Hybridschaltung ausgebildet ist, und daß die Ladeleitung (56) durch eine Bandleitung gebildet ist (Figs. 9, 10).

16. Entfernungsmeßgerät nach Anspruch 15, dadurch gekennzeichnet, daß die Bandleitung (56) aufgewickelt ist (Fig. 10).

17. Entfernungsmeßgerät nach einem der Ansprüche 13 bis 16, dadurch gekennzeichnet, daß im Emitterkreis des Avalanche-Transistors (50) eine Laserdiode (10) angeordnet ist (Fig. 6, 9).

18. Entfernungsmeßgerät nach einem der Ansprüche 13 bis 17, gekennzeichnet durch eine mit dem Avalanche-Impulsgenerator (41) verbundene Impulsformerstufe (42) zur Erzeugung der Referenzimpulse ($I_R$) (Fig. 6).

19. Entfernungsmeßgerät nach den Ansprüchen 17 und 18, dadurch gekennzeichnet, daß die Impulsformerstufe (42) durch einen der Laserdiode (10) parallelgeschalteten gedämpften Parallelschwingkreis (62, 63, 64) gebildet ist (Fig. 6, 9).

20. Entfernungsmeßgerät nach einem der Ansprüche 13 bis 19, dadurch gekennzeichnet, daß der Lichtimpulserzeuger (10, 11) einen Triggerimpulsgenerator (40) enthält, der Triggerimpulse zur Auslösung des Avalanche-Impulsgenerators (41) erzeugt.

## Revendications

1. Dispositif de mesure d'éloignement selon le procédé du temps de propagation d'impulsions, comprenant un générateur d'impulsions lumineuses (10) pour produire des impulsions lumineuses d'émission périodiques ($L_S$), une optique d'émission (12) pour envoyer les impulsions lumineuses d'émission ($L_S$), une optique de réception (13) pour recevoir les impulsions lumineuses d'écho ($L_E$) produites par réflexion des impulsions lumineuses d'émission ($L_S$) sur l'objet de la mesure, un transducteur photoélectrique (14) pour la conversion des impulsions lumineuses d'écho ($L_E$) en impulsions électriques de mesure ($I_M$), et comprenant, en outre, un dispositif de mesure du temps (ZM) pour mesurer l'intervalle de temps entre les flancs homologues de chaque impulsion de mesure ($I_M$) et d'une impulsion électrique de référence ($I_R$) qui est en relation temporelle prédéfinie avec l'impulsion lumineuse d'émission qui lui est affectée, caractérisé en ce qu'il est prévu un étage de transformation du temps (ZT) fonctionnant selon le processus d'échantillonnage et comportant un générateur d'impulsions d'exploration (23) pour produire des impulsions d'exploration périodiques ($I_A$) dont la période diffère légèrement de la période des impulsions lumineuses d'émission ($L_S$), un circuit d'exploration (21) pour les impulsions de référence ($I_R$), et un circuit d'exploration (22) pour les impulsions de mesure ($I_M$), l'étage de transformation du temps produisant, par exploration d'un grand nombre d'impulsions successives au moyen des impulsions d'exploration ($I_A$), des impulsions de référence en temps transformé ($I'_R$) et des impulsions de mesure en temps transformé ($I'_M$), en ce que le circuit d'exploration pour les impulsions de mesure (22) est conçu pour explorer des signaux faibles et bruités et reçoit sand amplification préalable les signaux électriques ($I_E$) sortant du convertisseur photoélectrique (14), et en ce que le dispositif de mesure du temps (ZM) mesure l'intervalle de temps entre les flancs homologues des impulsions en temps transformé ($I'_R$, $I'_M$).

2. Dispositif selon la revendication 1, caractérisé en ce que chaque circuit d'exploration (21, 22) est conformé en pont d'échantillonnage (88, 89, 90, 91, 92, 93, 94, 95) qui est commandé par des impulsions d'exploration étroites en push-pull.

3. Dispositif selon la revendication 2, caractérisé en ce que le pont d'échantillonnage (88 à 95) est réalisé en circuit hybride intégré (Figures 14, 15).

4. Dispositif selon la revendication 3, caractérisé en ce que le circuit hybride intégré comporte une première ligne microbande (92) fermée de façon exempte de réflexions à l'extrémité, par laquelle sont transmises les impulsions à explorer, en ce qu'une ligne à fente en court-circuit (95) court parallèlement à la ligne microbande (92), en ce qu'une seconde ligne microbande (103) fermée de façon exempte de réflexions à l'extrémité, par laquelle sont transmises les impulsions d'exploration d'une polarité fournies par le générateur (23) d'impulsions d'exploration pour produire les impulsions d'exploration étroites en push-pull, croise la ligne à fente (95), en ce qu'au point de croisement sont disposées dans la fente (95) deux diodes (88, 89) polarisées dans le sens de blocage et raccordées en sens opposés entre la première ligne microbande (92) et chacune à une condensateur (90, 91), dont l'autre électrode est reliée au conducteur de masse sur l'un et respectivement l'autre des côtés de la fente (95), et en ce que les points de jonction entre les diodes (88, 89) et les condensateurs (90, 91) sont reliés chacun par un conducteur de sortie (101, 102) pour recevoir les signaux apparaissant au condensateur (90, 91) (Figures 14, 15).

5. Dispositif selon l'une des revendications 3 ou 4, caractérisé en ce que le transducteur photoélectrique (14) présente une photodiode (82) qui est montée directement sur le circuit hybride intégré (Figure 14).

6. Dispositif selon la revendication 5, caractérisé en ce que les éléments de circuit (83, 84, 85) du transducteur photoélectrique (14), nécessaires à la polarisation de la photodiode (82), constituent des composants du circuit hybride intégré (Figure 14).

7. Dispositif selon l'une des revendications 1 à 6, caractérisé en ce que le générateur d'impulsions d'exploration (23) comprend au moins un étage générateur d'impulsions constitué en générateur d'impulsions à avalanche comportant un transistor à avalanche (71) et une ligne de charge (70) (Figure 11).

8. Dispositif selon la revendication 7, caractérisé en ce que le générateur d'impulsions d'exploration (23) comporte pour chaque circuit d'exploration (21, 22) un étage générateur d'impulsions (28, 29) propre (Figure 4).

9. Dispositif selon l'une des revendications 7 ou 8, caractérisé en ce que chaque générateur d'impulsions à avalanche (70, 71) est réalisé en circuit hybride intégré, et en ce que la ligne de charge (70) est constituée par une ligne à ruban (Figure 12).

10. Dispositif selon la revendication 9, caractérisé en ce que la ligne à ruban (70) est enroulée (Figure 12).

11. Dispositif selon l'une des revendications précédentes, caractérisé en ce que le générateur d'impulsions lumineuses (10, 11) fournissant les impulsions d'émission ($L_S$) effectue de façon intermittente des cycles de travail ($T_A$) interrompus par des temps de repos ($T_R$) (Figure 7).

12. Dispositif selon la revendication 11, caractérisé en ce que la durée de chaque cycle de travail ($T_A$) est à peu près égale à la durée d'un cycle d'exploration du processus d'échantillonnage.

13. Dispositif selon l'une des revendications 1 à 12, caractérisé en ce que le générateur d'impulsions lumineuses (10, 11) comporte un générateur d'impulsions à avalanche (41) comportant un transistor à avalanche (50) et une ligne de charge (56) (Figure 6).

14. Dispositif selon la revendication 13, caractérisé en ce que la base du transistor à avalanche (50) est polarisée négativement (Figure 6).

15. Dispositif selon l'une des revendications 13 ou 14, caractérisé en ce que le générateur d'impulsions à avalanche (41) est réalisé en circuit hybride intégré, et en ce que la ligne de charge (56) est constituée par une ligne à ruban (Figures 9, 10).

16. Dispositif selon la revendication 15, caractérisé en ce que la ligne à ruban (56) est enroulée (Figure 10).

17. Dispositif selon l'une des revendications 13 à 16, caractérisé en ce qu'une diode laser (10) est disposée dans le circuit émetteur du transistor à avalanche (50) (Figures 6, 9).

18. Dispositif selon l'une des revendications 13 à 17, caractérisé par un étage formateur d'impulsions (42) relié au générateur d'impulsions à avalanche (41) pour produire les impulsions de référence (I$_R$) (Figure 6).

19. Dispositif selon les revendications 17 et 18, caractérisé en ce que l'étage formateur d'impulsions (42) est formé d'un circuit oscillant parallèle amorti (62, 63, 64) monté en parallèle avec la diode laser (10) (Figures 6, 9).

20. Dispositif selon l'une des revendications 13 à 19, caractérisé en ce que le générateur d'impulsions lumineuses (10, 11) comprend un générateur d'impulsions d'attaque (40) qui produit des impulsions pour déclencher le générateur d'impulsions à avalanche (41).

**Claims**

1. Distance measuring apparatus based on the pulse travel time method comprising a light pulse generator (10) for generating periodic transmission light pulses (L$_S$), a transmitting optical system (12) for transmitting the transmission light pulses (L$_S$), a receiving optical system (13) for receiving the echo light pulses (L$_E$) produced by reflection of the transmission light pulses (L$_S$) at a target object, a photoelectric transducer (14) for converting the echo light pulses (L$_E$) to electrical measuring pulses (I$_M$), and a time measuring means (ZM) for measuring the time interval between corresponding edges of each measuring pulse (I$_M$) and of an electrical reference pulse (I$_R$) being in predetermined time relationship to the transmission light pulse associated therewith, characterized in that there is provided a time transformation stage (ZT) operating according to the sampling method and comprising a sampling pulse generator (23) for generating periodic sampling pulses (I$_A$) whose period is slightly different from the period of the transmission light pulses (L$_S$), a sampling circuit (21) for the reference pulses (I$_R$) and a sampling circuit (22) for the measuring pulses (I$_M$), which time transformation stage by sampling a large number of successive pulses by means of the sampling pulses (I$_A$) generates time-transformed reference pulses (I$_R'$) and time-transformed references pulses (I$_M'$), that the sampling circuit (22) for the measuring pulses is designed for the sampling of small and noise-infested signals and receives the electrical output signals (I$_E$) of the photoelectric transducer (14) without intervening amplification, and in that the time measuring means (ZM) measures the time interval between corresponding edges of the time-transformed pulses (I$_R'$, I$_M'$).

2. Distance measuring apparatus according to claim 1, characterized in that each sampling circuit (21, 22) is constructed as sampling bridge (88, 89, 90, 91, 92, 93, 94, 95) which is controlled by narrow push-pull sampling pulses.

3. Distance measuring apparatus according to claim 2, characterized in that the sampling bridge (88, 89, 90, 91, 92, 93, 94, 95) is constructed as integrated hybrid circuit (Fig. 14, 15).

4. Distance measuring apparatus according to claim 3, characterized in that the integrated hybrid circuit includes a first microstrip line (92) with reflection-free termination via which the pulses to be sampled are transmitted, that a short-circuited slit line (95) runs parallel to the microstrip line (92), that the slit line (95) is intersected by a second microstrip line (103) with reflection-free termination, via which the sampling pulses of one polarity supplied by the sampling pulse generator (23) are transmitted for generating the narrow push-pull sampling pulses, that at the intersection two reverse-biased diodes (88, 89) are disposed in the slit (95), which diodes are connected with opposite polarities between the first microstrip line (92) and a first and a second capacitor (90, 91), respectively, the other electrodes of the capacitors being connected to the ground conductor on the one side and on the other side of the slit (95), respectively, and that the connection points between the diodes (88, 89) and the capacitors (90, 91) are each connected to an output conductor (101, 102) for withdrawing the signal occurring at the capacitor (90, 91) (Fig. 14, 15).

5. Distance measuring apparatus according to claim 3 or 4, characterized in that the photoelectric transducer (14) comprises a photodiode (82) which is mounted directly on the integrated hybrid circuit (Fig. 14).

6. Distance measuring apparatus according to claim 5, characterized in that the circuit components (83, 84, 85) of the photoelectric transducer (14) necessary for biasing the photodiode (82) are formed as constituents of the integrated hybrid circuit (Fig. 14).

7. Distance measuring apparatus according to any one of claims 1 to 6, characterized in that the sampling pulse generator (23) includes at least one pulse generating stage formed as avalanche pulse generator with an avalanche transsistor (71) and a charging line (70) (Fig. 11).

8. Distance measuring apparatus according to claim 7, characterized in that the sampling pulse generator (23) includes a separate pulse generating stage (28, 29) for each sampling circuit (21, 22) (Fig. 4).

9. Distance measuring apparatus according to claim 7 or 8, characterized in that each avalanche pulse generator (70, 71) is formed as integrated hybrid circuit and that the charging line (70) is formed by a strip line (Fig. 12).

10. Distance measuring apparatus according to claim 9, characterized in that the strip line (70) is coiled (Fig. 12).

11. Distance measuring apparatus according to any one of the preceding claims, characterized in that the light pulse generator (10, 11) generating the transmission light pulses ($L_S$) operates intermittently in working cycles ($T_A$) interrupted by rest intervals ($T_R$) (Fig. 7).

12. Distance measuring apparatus according to claim 11, characterized in that the duration of each working cycle ($T_A$) is substantially equal to the duration of a sampling cycle of the sampling process.

13. Distance measuring apparatus according to any one of claims 1 to 12, characterized in that the light pulse generator (10, 11) includes an avalanche pulse generator (41) having an avalanche transistor (50) and a charging line (56) (Fig. 6).

14. Distance measuring apparatus according to claim 13, characterized in that the base of the avalanche transistor (50) is negatively biased (Fig. 6).

15. Distance measuring apparatus according to claim 13 or 14, characterized in that the avalanche pulse generator (41) is formed as integrated hybrid circuit and that the charging line (56) is formed by a strip line (Fig. 9, 10).

16. Distance measuring apparatus according to claim 15, characterized in that the strip line (56) is coiled (Fig. 10).

17. Distance measuring apparatus according to any one of claims 13 to 16, characterized in that a laser diode (10) is disposed in the emitter circuit of the avalanche transistor (50) (Fig. 6, 9).

18. Distance measuring apparatus according to any one of claims 13 to 17, characterized by a pulse shaper stage (42) connected to the avalanche pulse generator (41) for producing the reference pulses ($I_R$) (Fig. 6).

19. Distance measuring apparatus according to claims 17 and 18, characterized in that the pulse shaper stage (42) is formed by a damped parallel resonant circuit (62, 63, 64) connected in parallel with the laser diode (10) (Fig. 6, 9).

20. Distance measuring apparatus according to any one of claims 13 to 19, characterized in that the light pulse generator (10, 11) includes a trigger pulse generator (40) which produces trigger pulses for triggering the avalanche pulse generator (41).

Fig.1

Fig. 2

Fig.3

ZM — Zeitmeßschaltung

ZT — Zeittransformationsstufe

S — Sender

E — Empfänger

0 015 566

3

16 Zähliwpulsgenerator
17 Torschaltung
18 Impulszähler
19 Anzeige
20 bistabile Kippschaltung
21 Abtastschaltung
23 Abtastimpulsgenerator
15 Verstärker
22 Abtastschaltung
11 Impulsgenerator
10 Laserdiode
14 Photodetektor
12
13

$I_Z$, $I_T'$, $I_R'$, $I_M'$, $I_R$, $I_{-R}$, $I_A$, $I_S$, $L_S$, $I_M = I_E$, $L_E$

A

Fig.4

**Fig. 5**

**Fig.6**

**Fig. 7**

**Fig. 8**

Fig. 9

**Fig.10**

**Fig. 11**

**Fig. 12**

**Fig. 13**

Fig.14

Fig.15